(19)

Europäisches Patentamt
European Patent Office
Office européen des brevets

(11) **EP 3 457 386 A1**

(12) **EUROPEAN PATENT APPLICATION**
published in accordance with Art. 153(4) EPC

(43) Date of publication:
**20.03.2019 Bulletin 2019/12**

(51) Int Cl.:
***G09B 5/02*** *(2006.01)*       ***G06Q 50/20*** *(2012.01)*
***G09B 19/06*** *(2006.01)*

(21) Application number: **17876645.7**

(22) Date of filing: **16.11.2017**

(86) International application number:
**PCT/JP2017/041334**

(87) International publication number:
**WO 2018/101067 (07.06.2018 Gazette 2018/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **02.12.2016 JP 2016234721**

(71) Applicant: **Memory Supporter LLC
Otsu-shi
Shiga 5200501 (JP)**

(72) Inventors:
• **The inventor has waived his right to be thus
mentioned.**

(74) Representative: **Appelt, Christian W.
Boehmert & Boehmert
Anwaltspartnerschaft mbB
Pettenkoferstrasse 22
80336 München (DE)**

(54) **LEARNING SUPPORT SYSTEM, METHOD AND PROGRAM**

(57)      To provide a learning support system, method, and program that determine a predetermined period of time until next learning based on the linguistic similarity of a phrase to be learned by a user to the user's native language, thereby providing an opportunity for iterative learning at appropriate timing for each phrase to be learned depending on a user, and enhancing an effect of learning of a foreign language.

The learning support system comprises native language setting means 131 for setting a native language of a user; an learning phrase storage unit 112 for storing phrase information to be learned by the user with a learning stage; predetermined period of time calculation means 103 for calculating a predetermined period of time based on linguistic similarity of the phrase information to be learned by the user to the native language; storage control means 104 for storing the learning stage stored in the learning phrase storage unit 112 as a first memory state if learning has not been completed, storing it as a second memory state if learning has been completed, and storing it as the first memory state again if the predetermined period of time elapses; and output means 14 for outputting the phrase information to be learned by the user in an output style depending on the memory state stored in the learning phrase storage unit 112.

FIG.1

**Description**

[Technical Field]

The present invention relates to a learning support system, method and program for changing a display style of a phrase to be learned depending on a user who learns phrases of a foreign language.

[Background Art]

Hitherto, as an apparatus for supporting learning of a foreign language, for example, there has been known a learning apparatus that enhances a learning effect by increasing the number of learning times of a foreign word as the number of incorrect answers given by a user to a prepared question about the foreign language word increases (see, for example, Patent Literature 1).

The learning apparatus described in Patent Literature 1 controls the frequency of iterative learning based on a variable indicating the number of learning times about a question or an elapsed time, a variable indicating the number of correct and incorrect answers given by a user to questions, and the like, so that a question to which an incorrect answer was given previous time is likely to be asked next time and thereafter.

This learning apparatus determines, to enhance a learning effect, the frequency of iterative learning depending on a function called a forgetting function indicating that the amount of memory of a human exponentially decreases as time passes.

[Citation List]

[Patent Literature]

[PTL1]
JP-A-H6(1994)-289766

[Summary of Invention]

[Technical Problem]

However, the learning apparatus described in Patent Literature 1 has a disadvantage that the similarity between a phrase of a language to be learned by a user and the corresponding phrase of the user's native language is not taken into consideration.

That is, the difficulty in learning is different between, for example, a case where a user whose native language is Japanese learns an English phrase and a case where a user whose native language is English learns a Japanese phrase.

In particular, an understanding level or memory retention of a user greatly varies depending on whether or not a phrase to be learned is a loanword in the native language of the user, whether or not the type of written characters, such as alphabet, kana, or kanji, is familiar to the user, whether or not a phrase to be learned and the corresponding phrase of the user's native language are similar to each other in terms of spelling, or whether or not a phrase to be learned and the corresponding phrase of the user's native language are similar to each other in terms of pronunciation, and thus a learning effect is not uniform.

The foregoing learning apparatus determines the frequency of iterative learning without taking these circumstances into consideration, and thus it is not possible to obtain a favorable learning effect depending on phrases of a foreign language to be learned.

The present invention has been made to solve these problems, and an object of the present invention is to provide a learning support system, method and program that determine a predetermined period of time until next learning based on the linguistic similarity of a phrase to be learned by a user to the user's native language, thereby providing an opportunity for iterative learning at more appropriate timing for each phrase to be learned depending on a user, and enhancing an effect of learning of a foreign language.

[Solution to Problem]

The learning support system described in Claim 1 comprises native language setting means for setting a native language of a user;
learning phrase storage means for storing phrase information to be learned by the user together with a learning stage;

predetermined period of time calculation means for calculating a predetermined period of time based on linguistic similarity of the phrase information to be learned by the user to the native language input by the native language setting means; storage control means for storing the learning stage stored in the learning phrase storage means as a first memory state if learning has not been completed, storing the learning stage as a second memory state if learning has been completed, and storing the learning stage as the first memory state again if the predetermined period of time has elapsed after learning was completed; and

output means for outputting the phrase information to be learned by the user in a first output style and a second output style depending on the first memory state and the second memory state, respectively, stored in the learning phrase storage means by the storage control means.

The learning support system described in Claim 2 further comprises learning stage input means for inputting the learning stage from the user for the phrase information to be learned by the user.

An input by the learning stage input means is stored as the first memory state by the storage control means if learning has not been completed, and is stored as the second memory state by the storage control means if learning has been completed.

Accordingly, a phrase that has not been completely memorized by the user and that is to be learned becomes clear, and thus an opportunity for iterative learning can be provided more effectively.

The learning support system described in Claim 3 further comprises phrase information input means for inputting the phrase information to be learned by the user;

an phrase-related information storage unit for storing related information that is related to a phrase, the related information including the similarity; and

phrase matching means for determining whether or not the phrase information input by the phrase information input means and stored in the learning phrase storage means is stored in the phrase-related information storage unit.

The storage control means stores the learning stage as the first memory state regarding phrase information that is not stored in the phrase-related information storage unit based on a matching result obtained by the phrase matching means.

Accordingly, in a case where phrases to be learned by the user include a new word that has not been learned, the new word is made clear, and thus an opportunity to effectively learn the new word can be provided.

In the learning support system described in Claim 4,

the similarity includes any of a variable indicating whether or not the phrase information to be learned is a loanword in the native language,

a variable indicating whether or not a type of characters representing the phrase information to be learned is similar to a type of characters of the native language,

a variable indicating whether or not spelling of the phrase information to be learned is similar to spelling of the native language, and

a variable indicating whether or not pronunciation of the phrase information to be learned is similar to pronunciation of the native language, and

the predetermined period of time calculation means determines the predetermined period of time depending on the similarity.

Accordingly, a predetermined period of time until the next learning is accurately calculated based on specific similarity between a phrase to be learned by the user and a corresponding phrase of the user's native language, and thus an opportunity for iterative learning can be provided more appropriately.

In the learning support system described in Claim 5,

the predetermined period of time calculation means determines the predetermined period of time based on difficulty of a phrase in a language to be learned by the user.

Accordingly, an opportunity for iterative learning of a difficult phrase such as a phrase to be learned in upper grades or a phrase with a long spelling can be provided more appropriately.

In the learning support system described in Claim 6,

the predetermined period of time calculation means determines the predetermined period of time based on a learner level of the user for a language of a phrase to be learned.

Accordingly, a learning support system for enhancing an effect of learning of a foreign language can be provided to learners in a wide age range.

The learning support method described in Claim 7 is a method in which a learning support system executes a native language setting step of setting a native language of a user;

a learning phrase storage step of storing phrase information to be learned by the user together with a learning stage;

a predetermined period of time calculation step of calculating a predetermined period of time based on linguistic similarity of the phrase information to be learned by the user to the native language input by the native language setting step;

a storage control step of storing the learning stage stored in the learning phrase storage step as a first memory state if learning has not been completed, storing the learning stage as a second memory state if learning has been completed, and storing the learning stage as the first memory state again if the predetermined period of time has elapsed after learning was completed;

and an output step of outputting the phrase information to be learned by the user in a first output style and a second output style depending on the first memory state and the second memory state, respectively, stored in the learning phrase storage step by the storage control step.

The program described in Claim 8 causes a computer to function as a learning support system comprising native language setting means for setting a native language of a user;

learning phrase storage means for storing therein phrase information to be learned by the user together with a learning stage;

predetermined period of time calculation means for calculating a predetermined period of time based on linguistic similarity of the phrase information to be learned by the user to the native language input by the native language setting means;

storage control means for storing the learning stage stored in the learning phrase storage means as a first memory state if learning has not been completed, storing the learning stage as a second memory state if learning has been completed, and storing the learning stage as the first memory state again if the predetermined period of time has elapsed after learning was completed; and

output means for outputting the phrase information to be learned by the user in a first output style and a second output style depending on the first memory state and the second memory state, respectively, stored in the learning phrase storage means by the storage control means.

[Advantageous Effects of Invention]

According to the present invention, it is possible to provide a learning support system, method and program that calculate a predetermined period of time until next learning based on the linguistic similarity of phrase information to be learned by a user, thereby providing an opportunity for iterative learning at more appropriate timing for each phrase to be learned depending on a user, and enhancing an effect of learning of a foreign language.

[Brief Description of Drawings]

Fig. 1 is a diagram illustrating an overall configuration of a learning support system according to Embodiment 1 of the present invention.

Fig. 2 is a diagram schematically illustrating an example data structure in a storage unit according to Embodiment 1 of the present invention.

Fig. 3 is a diagram illustrating a specific example data structure of a learning phrase storage unit according to Embodiment 1 of the present invention.

Fig. 4 is a diagram illustrating a specific example data structure of a phrase-related information storage unit according to Embodiment 1 of the present invention.

Fig. 5 is a flowchart illustrating a procedure from the start, reading phrases to be learned and to extracting phrases in the learning support system according to Embodiment 1 of the present invention.

Fig. 6 is a flowchart illustrating a processing procedure when a user learns in the learning support system according to Embodiment 1 of the present invention.

Fig. 7 is a correspondence table showing predetermined periods of time corresponding to learning levels of a phrase in the learning support system according to Embodiment 1 of the present invention.

Fig. 8 is a flowchart illustrating a processing procedure of calculating a predetermined period of time and an elapsed time for a phrase to be learned by a user in the learning support system according to Embodiment 1 of the present invention.

Fig. 9 is a correspondence table showing coefficient 1 corresponding to phrase difficulty levels in the learning support system according to Embodiment 1 of the present invention.

Fig. 10 is a correspondence table showing coefficient 1 corresponding to learner levels of users in the learning support system according to Embodiment 1 of the present invention.

Fig. 11 is a correspondence table showing coefficient 1 corresponding to difficulty levels in the learning support system according to Embodiment 1 of the present invention.

Fig. 12 is a flowchart illustrating a processing procedure of calculating coefficient 1 of a predetermined period of time for a phrase to be learned by a user in the learning support system according to Embodiment 1 of the present invention.

Fig. 13 is a flowchart illustrating a processing procedure of calculating coefficient 2 of a predetermined period of time for a phrase to be learned by a user in the learning support system according to Embodiment 1 of the present invention.

Fig. 14 is a correspondence table showing coefficient 2 corresponding to similarity sums of a phrase to be learned by a user to a native language in the learning support system according to Embodiment 1 of the present invention.

Fig. 15 illustrates an example sample showing the similarity of a phrase to be learned by a user to a native language in the learning support system according to Embodiment 1 of the present invention.

Fig. 16 illustrates an example sample showing the similarity of a phrase to be learned by a user to a native language in the learning support system according to Embodiment 1 of the present invention.

Fig. 17 is a diagram illustrating an overall configuration of a learning support system according to Embodiment 2 of the present invention.

Fig. 18 is a diagram schematically illustrating an example data structure in a storage unit according to Embodiment 2 of the present invention.

[Description of Embodiments]

Hereinafter, embodiments of the present invention will be described in detail with reference to the attached drawings.

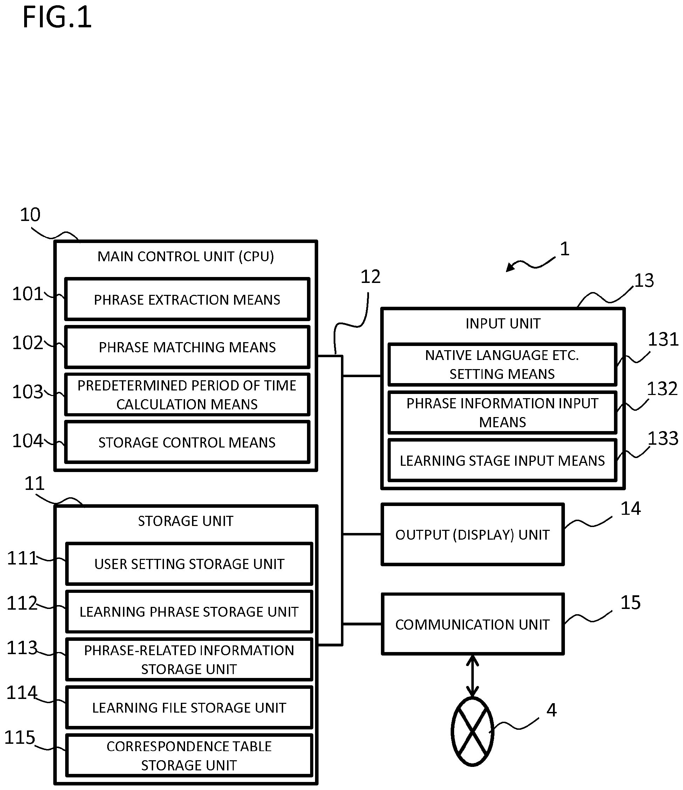

Figs. 1 to 18 are figures illustrating the embodiments of the present invention. In these figures, parts denoted by the same reference signs are identical to each other, and the basic configurations and operations thereof are similar to each other.

[Embodiment 1]

Fig. 1 is a diagram illustrating an overall configuration of a learning support system according to Embodiment 1 of the present invention.

The learning support system 1 is comprised of a main control unit (CPU) 10 that controls the overall system in a centralized manner, a storage unit 11 that stores therein various pieces of information, an input unit 13 made up of a keyboard and a mouse or the like, an output (display) unit 14 such as a display, a communication unit 15 connected to a network 4, and a bus line 12 that connects the individual units.

The main control unit (CPU) 10 implements phrase extraction means 101, phrase matching means 102, predetermined period of time calculation means 103, storage control means 104, and various types of processing means and determination means or the like, via a program such as an operating system, a program specifying a procedure of this learning system, and the like.

The storage unit 11 is comprised of a volatile or non-volatile semiconductor device such as a RAM or ROM, and an auxiliary storage device such as a hard disk or optical disc.

The storage unit 11 comprises a user setting storage unit 111, a learning phrase storage unit 112, a phrase-related information storage unit 113, a learning file storage unit 114, a correspondence table storage unit 115, and the like.

The input unit 13 comprises a keyboard, a mouse or a pointing device such as a trackball.

The input unit 13 includes native language etc. setting means 131 for setting and inputting a native language, a learner level, and so forth of a user, phrase information input means 132 for inputting a phrase to be learned by the user, and learning stage input means 133 for inputting whether or not the user has completed learning an phrase, which are used by the user to input various pieces of information.

A phrase input through the phrase information input means 132 includes file data read from the learning file storage unit 114 and electronic data read from the network 4 via the communication unit 15.

The output (display) unit 14 is used to monitor data input by the user and to display phrases or the like to be learned.

The communication unit 15 ensures exterior communication via the network 4, and is used, for example, to receive phrase data to be learned from an external site using a protocol such as a TCP/IP.

The phrase extraction means 101 extracts automatically a portion of a phrase stored in the learning phrase storage unit 112 by using a morphological analysis method or the like.

The phrase extraction means 101 is implemented as a program running on the main control unit (CPU) 10.

Where, a phrase includes a word, an idiom, an idiomatic phrase, a sentence, sentences, and the like.

An extracted portion of a phrase, that is, an extracted phrase, includes a word, an idiom, an idiomatic phrase, and the like.

The phrase matching means 102 determines whether or not an extracted phrase extracted by the phrase extraction means 101 is stored in the phrase-related information storage unit 113.

The phrase matching means 102 is implemented as a program running on the main control unit (CPU) 10.

The predetermined period of time calculation means 103 calculates a predetermined period of time from when learning is completed to when an opportunity for learning is provided to the user again, for an extracted phrase that the user has once completed learning.

The predetermined period of time calculation means 103 is implemented as a program running on the main control unit (CPU) 10.

The storage control means 104 controls storage of data in the learning phrase storage unit 112, the data indicating whether each of extracted phrases, extracted by the phrase extraction means 101 from phrases to be learned by the user, has been memorized by the user and learning has been completed, or has not been memorized by the user and learning has not been completed.

The storage control means 104 is implemented as a program running on the main control unit (CPU) 10.

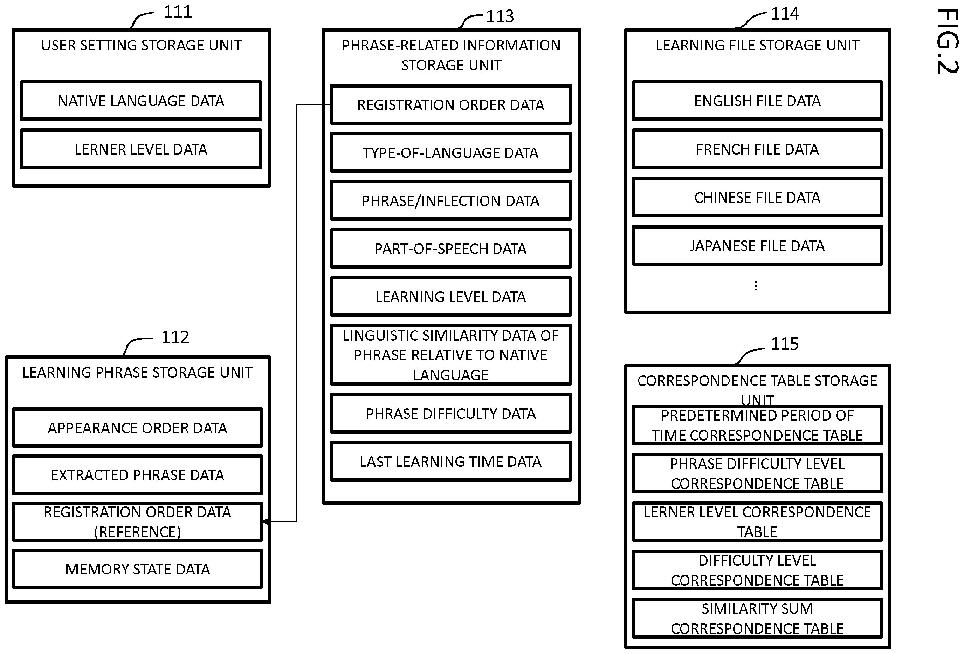

Fig. 2 is a diagram schematically illustrating an example data structure in the storage unit according to Embodiment 1 of the present invention.

The user setting storage unit 111 holds, mainly in the RAM, native language data of the user, learner level data indicating the number of years of learning experience or academic ability in a language to be learned, and so forth.

The learning phrase storage unit 112 holds phrases to be learned by the user.

The learning phrase storage unit 112 holds, mainly in the RAM, appearance order data indicating the order in which the extracted phrase appears in the entire phrase, extracted phrase data, registration order data indicating the order in which the extracted phrase was registered in the phrase-related information storage unit 113 in a case where the phrase matching means 102 determines that the extracted phrase is stored in the phrase-related information storage unit 113, and memory state data indicating whether or not the user has memorized the extracted phrase, for each of extracted phrases extracted by the phrase extraction means 101.

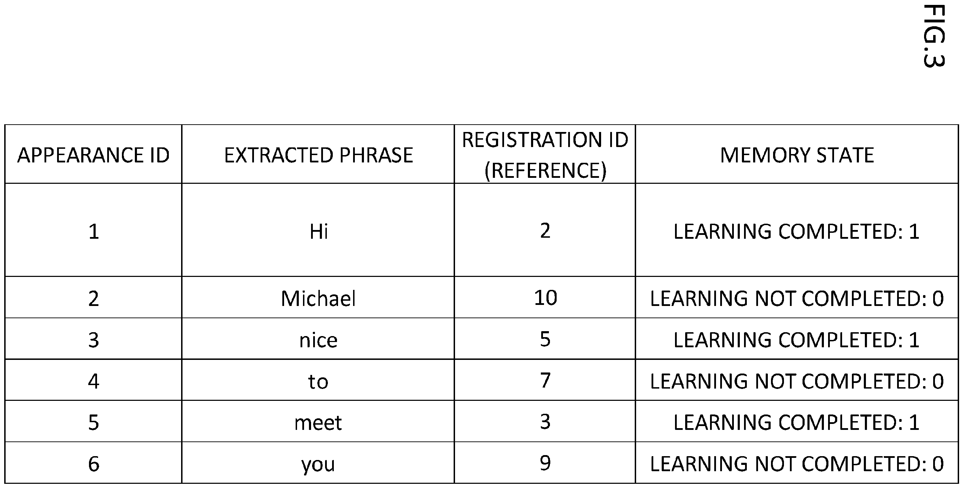

Fig. 3 illustrates a specific example data structure of the learning phrase storage unit according to Embodiment 1 of the present invention.

The data of extracted phrases is stored in units of rows.

The first column from the left gives the appearance order in the entire phrase, that is, a number increasing one by one like 1, 2, 3 is automatically assigned and stored as an appearance ID, which indicates the extraction order in the morphological analysis method or the like.

The second column stores extracted phrases, for example, "Hi", "Michael", and so forth.

The third column gives registration IDs, each indicating the order in which the extracted phrase was registered in the phrase-related information storage unit 113.

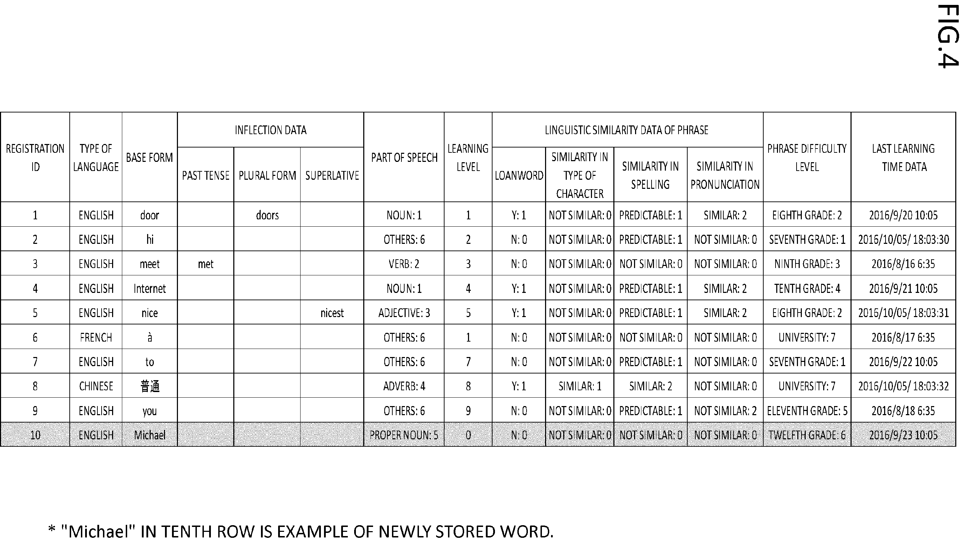

For example, in the case of "Hi" in the first row, "2" is stored because "hi" is stored as a phrase base form corresponding to the second row in the example data structure of the phrase-related information storage unit in Fig. 4, which will be described below.

Finally, the fourth column stores, for example, a flag such as "LEARNING COMPLETED: 1" or "LEARNING NOT COMPLETED: 0", as memory state data indicating whether or not the user has memorized the extracted phrase.

The phrase-related information storage unit 113 holds, for each phrase stored therein, registration order data, type-of-language data, phrase/inflection data, part-of-speech data, learning level data indicating the number of years of learning experience of the user, linguistic similarity data relative to a native language, phrase difficulty data indicating the difficulty of the phrase based on the number of years of experience desired for learning or the number of characters in spelling, last learning time data indicating the time when the user finally completed learning last time, and so forth.

The phrase-related information storage unit 113 is a database established mainly in the auxiliary storage device such as a hard disk or optical disc, and the data stored therein, such as words, is able to undergo predetermined operations such as search, addition, update, and deletion.

Fig. 4 illustrates a specific example data structure of the phrase-related information storage unit according to Embodiment 1 of the present invention.

The data in the phrase-related information storage unit is stored in a unit of a row for each phrase.

The first column from the left gives registration IDs, that is, a number increasing one by one like 1, 2, 3, is automatically assigned and stored as the storage order in the phrase-related information storage unit 113.

The second column represents the types of language of registered phrases.

For example, in the case of "door" in the first row, "English" is stored.

The third column stores the phrase base forms, and the following fourth to sixth rows (columns) store inflection data.

For example, in the case of a noun "door" in the first row, "door" is stored as the phrase base form in the third column, and the plural form "doors" is stored as inflection data in the fifth column.

In the case of a verb "meet" in the third row, "meet" is stored as the phrase base form in the third column, and the past tense "met" is stored in the fourth column.

Although not illustrated in Fig. 4, various inflection data can be stored, for example, a past participle, a third person singular present tense, a present participle, and so forth for a verb, and a comparative for an adjective or adverb.

The seventh column from the left gives part-of-speech data.

Numeric data corresponding to a part of speech is stored, for example, "noun: 1" in the case of "door" in the first row, "verb: 2" in the case of "meet" in the third row, and "adjective: 3" in the case of "nice" in the fifth row.

The eighth column represents learning levels indicating the number of learning experience of the user.

For example, "0" is stored for a phrase that has never been learned, whereas any one of "1" to "9" in nine ranks of levels is stored for a phrase that has ever been learned.

For example, a learning level "1" is stored in the case of the phrase base form "door" in the first row, and a learning level "0" is stored in the case of the phrase base form "Michael" in the tenth row because this is a new phrase.

The ninth to twelfth columns represent linguistic similarity data relative to the native language.

Whether or not the phrase is a loanword (Y: 1, N: 0), whether or not the type of character is similar (similar: 1, not similar: 0), whether or not the spelling is similar (similar: 2, predictable: 1, not similar: 0), and whether or not the pronunciation is similar (similar: 2, not similar: 0) are stored in order as numeric data.

For example, in the case of the phrase base form "door" in the first row, loanword "Y: 1", similarity in type of character "not similar: 0", similarity in spelling "predictable: 1", and similarity in pronunciation "similar: 2" are stored.

The second column from the right gives phrase difficulty levels each indicating the number of years of experience desired for learning, which is stored, for example, any one of "seventh grade: 1" to "university: 7" in seven ranks of levels.

For example, in the phrase base form "door" in the first row, "eighth grade: 2" is stored because this phrase is to be learned in the eighth grade.

The rightmost column gives last learning time data indicating the times when the user finally completed learning, and is stored as a date and time, for example.

For example, in the phrase base form "door" in the first row, "2016/9/20 10:05" is stored.

The type of language, inflection data, part-of-speech data, linguistic similarity data relative to the native language in the ninth to twelfth columns, phrase difficulty data, and so forth that are stored in the phrase-related information storage unit 113 may be obtained by the main control unit (CPU) 10 by automatically collecting data from an electronic dictionary file (not illustrated) in the learning support system or from an online electronic dictionary service on the network 4 via the communication unit 15 and by storing the data, for example.

In addition, the user may input necessary information or edit the data through the input unit 13.

The learning file storage unit 114 holds file data of various languages that stores in advance phrases to be learned by the user.

The learning file storage unit 114 holds, for example, English file data, French file data, Chinese file data, Japanese file data, and the like, for individual languages.

The individual pieces of file data may be about different matters or may include corresponding translations or the like about the same matter.

The learning file storage unit 114 is a database established mainly in the auxiliary storage device such as a hard disk or optical disc, and the file data stored therein is able to undergo predetermined operations such as search, addition, update, and deletion.

The correspondence table storage unit 115 holds various pieces of correspondence table data, such as a predetermined period of time correspondence table that is used to determine a predetermined period of time until next time when the user is to learn an phrase, an phrase difficulty level correspondence table, a learner level correspondence table, a difficulty level correspondence table, and a similarity sum correspondence table.

The correspondence table storage unit 115 may be held in the RAM or may be stored in the auxiliary storage device such as a hard disk or optical disc.

Next, the following describes an operation of the learning support system according to Embodiment 1 of the present invention configured as described above with reference to Figs. 3 to 15, in the order of (1) a procedure from the start, reading a phrase to be learned and to extracting phrases, (2) a processing procedure when the user learns, and (3) a processing procedure of calculating a predetermined period of time and an elapsed time for a phrase to be learned by the user.

(1) Procedure from the start, reading a phrase to be learned and to extracting phrases

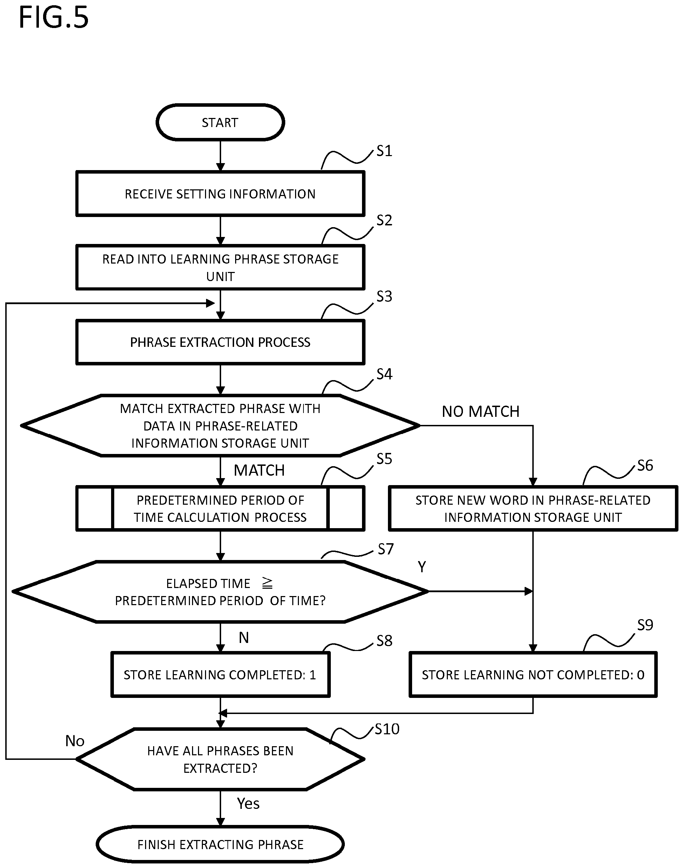

First, a description will be given with reference to the flowchart in Fig. 5 by using the specific example data structures in Figs. 3 and 4 as an example.

Fig. 5 is a flowchart illustrating a procedure from the start of learning, reading a phrase to be learned and to extracting phrases in the learning support system according to Embodiment 1 of the present invention.

In step S1, the main control unit (CPU) 10 receives setting information including a native language and a learner level from the user through the bus line 12, using the native language etc. setting means 131.

The main control unit (CPU) 10 stores the received setting information as native language data and learner level data in the user setting storage unit 111.

The native language data is, for example, "Japanese", "English", or the like, and the learner level (data) is, for example, "seventh grade", "eleventh grade", or the like.

In step S2, the main control unit (CPU) 10 stores phrase information to be learned by the user in the RAM of the storage unit 11 through the bus line 12, using the phrase information input means 132.

The main control unit (CPU) 10 may receive an instruction from the user via the phrase information input means 132, read the file data recorded in advance in the learning file storage unit 114 as phrase information to be learned, and store the file data in the RAM of the storage unit 11.

The main control unit (CPU) 10 stores, for example, "Hi, Michael, nice to meet you!" in the RAM as a phrase to be learned.

In step S3, the main control unit (CPU) 10 sequentially extracts portions of the phrase stored in the RAM of the storage unit 11 by using, for example, the morphological analysis method or the like, the portions serving as extracted phrases.

The main control unit (CPU) 10 stores appearance order data and the extracted phrase data in the learning phrase storage unit 112.

The main control unit (CPU) 10 stores, for example, an appearance ID "1", an extracted phrase "Hi", an appearance ID "2", an extracted phrase "Michael", and so forth of the foregoing phrase in the learning phrase storage unit 112, as in the example data structure in Fig. 3.

In step S4, the main control unit (CPU) 10 matches each of the extracted phrases with the phrase/inflection data stored in the phrase-related information storage unit 113.

If both match each other (match), the main control unit (CPU) 10 stores the registration order data stored in the phrase-related information storage unit 113 in the learning phrase storage unit 112 as reference data, and the process proceeds to step S5.

If both do not match (no match), the process proceeds to step S6.

The main control unit (CPU) 10 matches, for example, the foregoing extracted phrase "Hi" with the phrase base form "hi" stored in association with the registration ID "2" in the data structure of the phrase-related information storage unit illustrated in Fig. 4, and stores the registration ID "2" as the registration ID (reference) in Fig. 3.

In step S5, the main control unit (CPU) 10 calculates a predetermined period of time and an elapsed time for a word or the like that has been determined to match by using the predetermined period of time calculation means 103, and then the process proceeds to step S7.

Where, the predetermined period of time is a period of time from when the user once completed learning to when an opportunity for learning is provided again.

The elapsed time is a period of time from when the user once completed learning to the present.

The time when the user once completed learning is stored as last learning time data in the data structure of the phrase-related information storage unit illustrated in Fig. 5, in the form of "2016/9/20 10:05", for example.

A detailed method for calculating a predetermined period of time and an elapsed time will be described below in the following (3) a processing procedure of calculating a predetermined period of time and an elapsed time for a phrase to be learned by the user.

In step S6, the main control unit (CPU) 10 stores the extracted phrase that does not match the phrase/inflection data stored in the phrase-related information storage unit 113 as a new word at the end of the phrase/inflection data stored in the phrase-related information storage unit 113.

Subsequently, the main control unit (CPU) 10 stores the registration order data stored in the phrase-related information storage unit 113 as reference data in the learning phrase storage unit 112, and the process proceeds to step S9.

For example, the appearance ID "2" or the extracted phrase "Michael" extracted in step S3 does not match, and thus the main control unit (CPU) 10 adds a registration ID "10" in the tenth row at the bottom of the data structure of the phrase-related information storage unit illustrated in Fig. 4, and stores the extracted phrase "Michael" as the phrase base form.

Subsequently, the main control unit (CPU) 10 stores the added registration ID "10" as the registration ID (reference) "10" in Fig. 3.

Subsequently, in step S7, the main control unit (CPU) 10 compares the predetermined period of time obtained by the predetermined period of time calculation means 103 in step S5 with an elapsed time.

If the elapsed time does not exceed the predetermined period of time (N), the process proceeds to step S8 with "learning completed" being left as is.

If the elapsed time exceeds the predetermined period of time (Y), the process proceeds to step S9 with "learning not completed".

In step S8, the main control unit (CPU) 10 keeps the memory state stored in the phrase-related information storage unit 113 "learning completed: 1", and the process proceeds to step S10.

In step S9, the main control unit (CPU) 10 stores the memory state stored in the phrase-related information storage unit 113 as "learning not completed: 0", and the process proceeds to step S10.

In step S10, the main control unit (CPU) 10 determines whether or not there is a portion to be extracted from the phrase stored in the RAM of the storage unit 11.

If there is any portion to be extracted, the process returns to step S3 and the extraction process is continued.

If all portions of the phrase have been extracted, the extraction process is finished.

(2) Processing procedure when the user learns

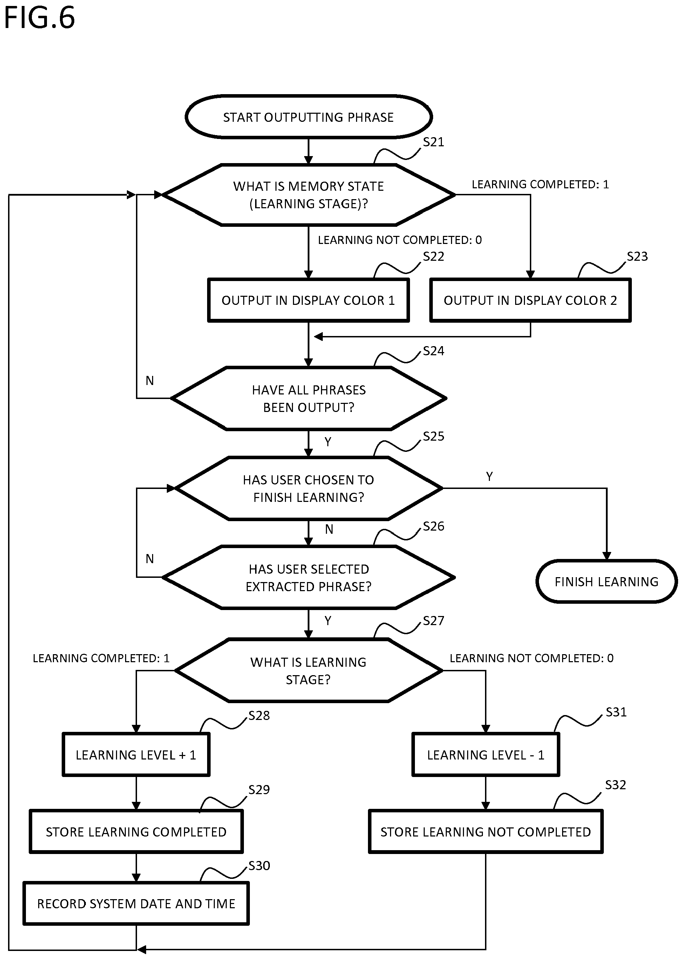

Next, a description will be given with reference to the flowchart in Fig. 6 by using the specific data structures in Figs. 3 and 4 as an example.

Fig. 6 is a flowchart illustrating a processing procedure when the user learns in the learning support system according to Embodiment 1 of the present invention.

It is assumed that an extraction process for the phrase to be learned by the user has finished, for example, the example data structure of the learning phrase storage unit illustrated in Fig. 3 is stored in the learning phrase storage unit 112, and the example data structure of the phrase-related information storage unit illustrated in Fig. 4 is stored in the phrase-related information storage unit 113.

In step S21, the main control unit (CPU) 10 determines the value stored as the memory state of an extracted phrase stored in the phrase-related information storage unit 113.

In the case of "learning not completed: 0", the process proceeds to step S22.

In the case of "learning completed: 1", the process proceeds to step S23.

In step S22, the main control unit (CPU) 10 outputs (displays) the extracted phrase stored in the learning phrase storage unit 112 to (on) the output (display) unit 14 in display color 1.

In step S23, the main control unit (CPU) 10 outputs (displays) the extracted phrase to (on) the output (display) unit 14 in display color 2.

In a case where a plurality of extracted phrases identical to each other are output to the output (display) unit 14, all the identical extracted phrases are output (displayed) in the same display color.

After the output, the process proceeds to step S24.

For example, in the case of the extracted phrase "Michael" in Fig. 3, "learning not completed: 0" is stored as the memory state, and thus the extracted phrase "Michael" is output to (displayed on) the output (display) unit 14 in display color 1.

As display color 1, various highlighting styles may be applied to the phrase to be learned.

For example, the color of the characters of "Michael" may be red or purple, the characters of "Michael" may be enclosed, bold, or italic, the characters of "Michael" may be underlined with a double line or a wavy line, or the background color of the characters of "Michael" may be yellow or red.

On the other hand, in the case of the extracted phrase "Hi" in Fig. 3, "learning completed: 1" is stored as the memory state, and thus "Hi" is output to (displayed on) the output (display) unit 14 in display color 2.

Display color 2 represents a normal display style, and thus only an extracted phrase for which learning has not been completed is highlighted, leaving a strong impression on the user.

In step S24, the main control unit (CPU) 10 determines whether or not all the extracted phrases stored in the learning phrase storage unit 112 have been output.

If there is any extracted phrase that has not been output (N), the process returns to step S21, and the main control unit (CPU) 10 continues the output operation.

If all the extracted phrases have been output (Y), the main control unit (CPU) 10 causes the process to proceed to step S25.

That is, for example, the main control unit (CPU) 10 continues the output operation so that the extracted phrase "Hi" in the first row to the extracted phrase "you" in the bottom row of the example data structure of the learning phrase storage unit in Fig. 3 are sequentially output to (displayed on) the output (display) unit 14.

In step S25, the main control unit (CPU) 10 determines whether or not an input for finishing learning has been received from the user via the learning stage input means 133, the phrase information input means 132, or the like.

If an input for finishing learning has been received from the user (Y), learning is finished.

If an input has not been received (N), the process proceeds to step S26.

In step S26, the main control unit (CPU) 10 determines whether or not the user has selected the extracted phrase that is output (displayed) using the learning stage input means 133.

If the user has selected the extracted phrase (Y), the process proceeds to S27.

If the user has not selected anything (N), the process returns to step S25.

In step S27, the main control unit (CPU) 10 waits for input of a learning stage from the learning stage input means 133.

In the case of "learning completed: 1", the process proceeds to step S28.

In the case of "learning not completed: 0", the process proceeds to step S31.

In step S28, the main control unit (CPU) 10 adds 1 to the learning level data that corresponds to the selected extracted phrase and that is stored in the phrase-related information storage unit 113 and stores the sum.

If the sum exceeds 9, the learning level data is stored as "9".

Subsequently, the process proceeds to step S29.

For example, the learning level of the phrase base form "Michael" stored in the tenth row of the example data structure of the phrase-related information storage unit in Fig. 4 is "0".

Thus, 1 is added to it and "1" is stored as a new learning level.

In step S29, the main control unit (CPU) 10 stores "learning completed: 1" as the memory state that corresponds to the selected extracted phrase and that is stored in the learning phrase storage unit 112.

Subsequently, the process proceeds to step S30.

In step S30, the main control unit (CPU) 10 stores the system date and time of the learning support system 1 as the last learning time data stored in the phrase-related information storage unit 113.

Subsequently, the process returns to step S21, and the process continues.

On the other hand, in step S31 that is performed in the case of "learning not completed: 0" in step S27, the main control unit (CPU) 10 subtracts 1 from the learning level data, that corresponds to the selected extracted phrase and that is stored in the learning phrase storage unit 112, and stores the difference.

If the difference is less than 1, "1" is stored as the learning level data. Subsequently, the process proceeds to step S32.

For example, the learning level of the phrase base form "nice" stored in the fifth row of the example data structure of the phrase-related information storage unit in Fig. 4 is "5".

Thus, 1 is subtracted from it and "4" is stored as a new learning level.

In step S32, the main control unit (CPU) 10 stores "learning not completed: 0" as the memory state that corresponds to the selected extracted phrase and that is stored in the learning phrase storage unit 112.

Subsequently, the process returns to step S21 and the process continues.

(3) Processing procedure of calculating a predetermined period of time and an elapsed time for a phrase to be learned by the user

Before describing the processing procedure of calculating a predetermined period of time and an elapsed time, an outline of a method for calculating the predetermined period of time will be described.

The forgetting curve, developed by a psychologist Hermann Ebbinghaus and describing that the amount of memory of a human decreases as time passes, is expressed by the following logarithmic function.

$$\text{Amount of memory b(\%)} = 100 \times \text{coefficient k}/[(\log \text{ period of time t})^{\text{coefficient c}} + \text{coefficient k}] \cdots (1)$$

Where, the amount of memory b is an amount of memory (%) after learning, and each of k and c is a coefficient.

Typically, a forgetting curve is approximately derived from the function and is expressed by the following negative exponential function, for example.

$$\text{Degree of memory R} = \text{Exp} \left(- \text{ period of time t/strength of memory S}\right) \cdots (2)$$

The strength of memory S in equation (2) is proportional to the number of learning times, for example, and maintains a constant degree of memory R even after the period of time t elapses.

In other words, the period of time t, during which iterative learning is performed to maintain the same degree of memory, gradually increases in an exponential manner as the number of learning times increases.

A predetermined period of time for an extracted phrase from when learning is completed to when an opportunity for learning is provided to the user again is calculated by using the following calculation formula.

$$\text{Predetermined period of time} = \text{coefficient 1} \times \text{Exp} \left(\text{coefficient 2} \times \text{learning level}\right) \cdots \ (3)$$

Where, coefficient 1 and coefficient 2 are adjustement coefficients, and the standard of each coefficient is 1.

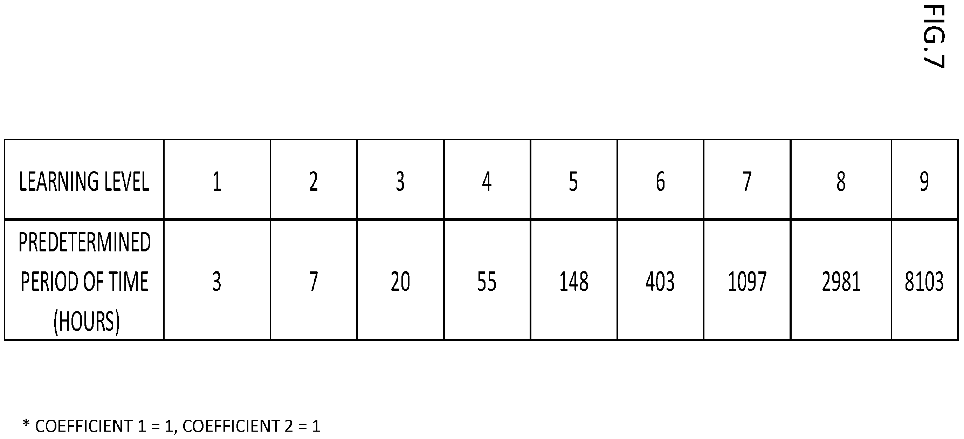

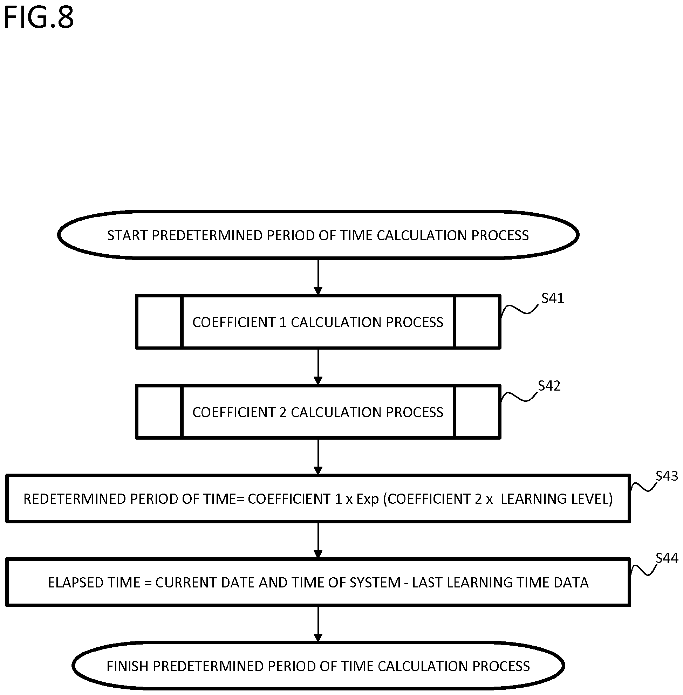

The following describes a processing procedure of calculating a predetermined period of time and an elapsed time for a phrase to be learned by the user with reference to the flowchart in Fig. 8 by using the correspondence table in Fig. 7.

Fig. 7 is a correspondence table that shows predetermined period of times corresponding to learning levels of a phrase in the learning support system according to Embodiment 1 of the present invention and that is stored in the correspondence table storage unit 115 in Fig. 2.

The top row represents the learning levels in the example data structure of the phrase-related information storage unit described with reference to Fig. 4, indicated in nine ranks from 1 to 9.

The bottom row represents predetermined period of times, each being obtained through calculation based on equation (3) when both coefficient 1 and coefficient 2 are 1, which is the standard.

Fig. 8 is a flowchart illustrating a processing procedure of calculating a predetermined period of time and an elapsed time for a phrase to be learned by the user in the learning support system according to Embodiment 1 of the present invention.

When the process proceeds to the predetermined period of time calculation process in step S5 in Fig. 5, the subroutine process in Fig. 8 starts.

In step S41, the main control unit (CPU) 10 performs a coefficient 1 calculation process for the extracted phrase.

Subsequently, in step S42, the main control unit (CPU) 10 performs a coefficient 2 calculation process.

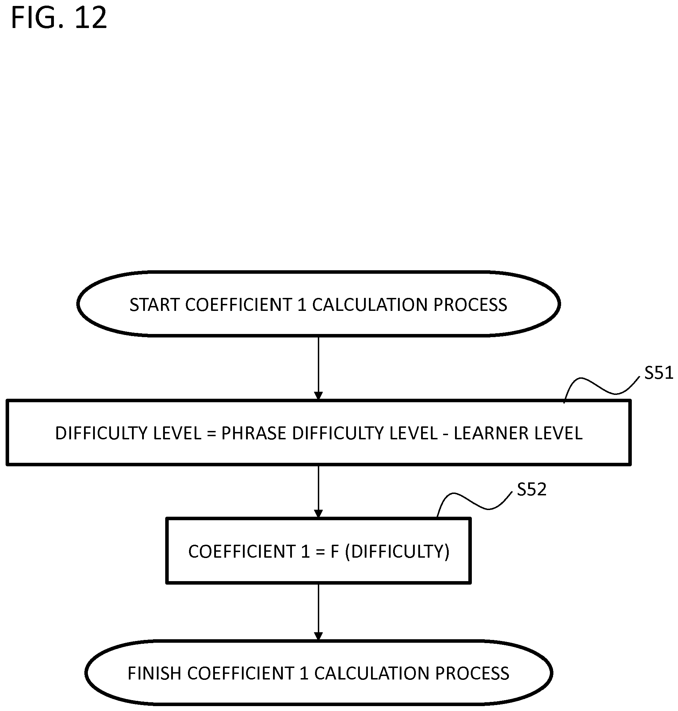

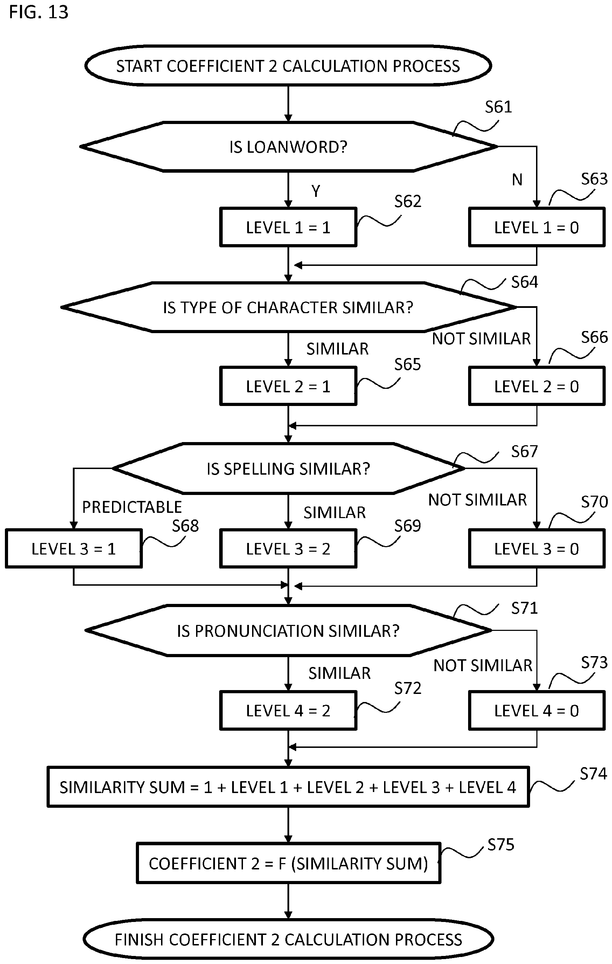

A detailed calculation method for coefficient 1 will be described below with reference to the flowchart in Fig. 12, and a detailed calculation method for coefficient 2 will be described below with reference to the flowchart in Fig. 13.

In step S43, the main control unit (CPU) 10 calculates a predetermined period of time based on coefficient 1 obtained in step S41, coefficient 2 obtained in step S42, and the learning level data stored in the phrase-related information storage unit 113.

For example, in the case of "Internet" in the fourth row of the example data structure of the phrase-related information storage unit illustrated in Fig. 4, the learning level is "4".

Thus, the predetermined period of time is calculated to be "55" hours if both coefficient 1 and coefficient 2 are 1.

In step S44, the main control unit (CPU) 10 calculates, as an elapsed time, the difference between the last learning time data stored in the phrase-related information storage unit 113 and the current date and time of the system.

After that, the subroutine process in Fig. 8 is finished, and the process proceeds to step S7 in Fig. 5.

<Coefficient 1 calculation process>

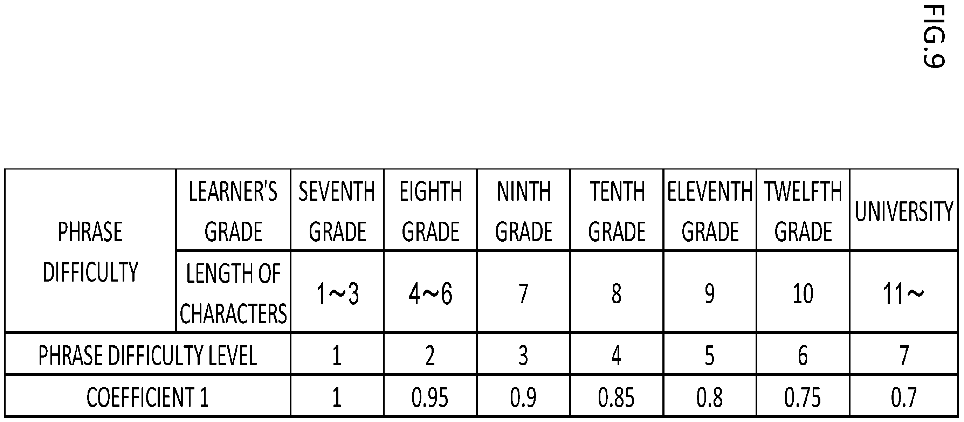

The following describes a calculation processing procedure for coefficient 1 with reference to the flowchart in Fig. 12 by using the correspondence tables in Figs. 9 to 11.

Fig. 9 is a correspondence table that shows coefficients 1 corresponding to phrase difficulty levels in the learning support system according to Embodiment 1 of the present invention and that is stored in the correspondence table storage unit 115 in Fig. 2.

The top two rows represent phrase difficulty.

The phrase difficulty may be represented by, for example, a learner's grade indicating the number of years of experience desired for learning or the length of characters of the phrase.

In the example data structure of the phrase-related information storage unit described with reference to Fig. 4, a learner's grade indicating the number of years of experience desired for learning is used as a phrase difficulty level.

The middle row represents phrase difficulty levels corresponding to phrase difficulty, indicated in seven ranks from 1 to 7.

The phrase difficulty level is used to calculate coefficient 1 in consideration of another element.

The bottom row represents the values of coefficient 1 corresponding to the phrase difficulty levels in the middle row.

The value of coefficient 1 is 1 in a standard state as described in equation (3), decreases to be smaller than 1 at 0.05 intervals as the phrase difficulty increases so as to provide an opportunity for iterative learning at more appropriate timing, and is 0.7 at the minimum.

Coefficient 1 in the bottom row is used in a case where the phrase difficulty level is independently used as the difficulty level described below.

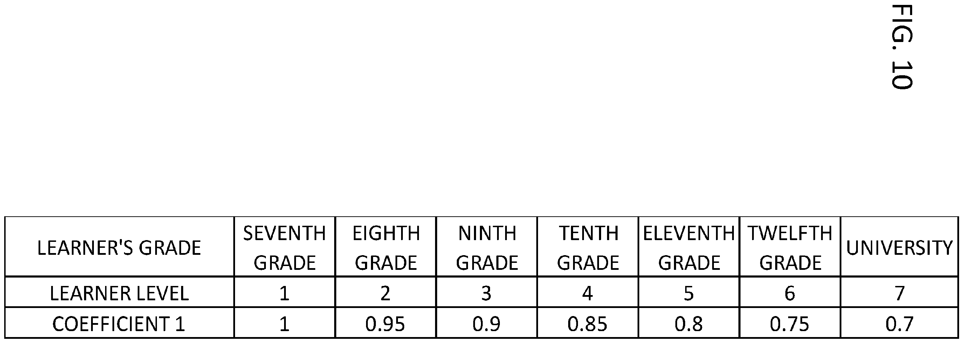

Fig. 10 is a correspondence table that shows coefficients 1 corresponding to learner levels of users in the learning support system according to Embodiment 1 of the present invention and that is stored in the correspondence table storage unit 115 in Fig. 2.

The top row represents learner's grades indicating the number of years of learning experience or academic ability of a learner.

The middle row represents learner levels corresponding to the learner's grades in the top row, indicated in seven ranks from 1 to 7 in the same way as for Fig. 9.

The learner level is used to calculate coefficient 1 in consideration of another element.

The bottom row represents the values of coefficient 1 corresponding to the learner levels in the middle row.

The value of coefficient 1 is 1 in a standard state, decreases to be smaller than 1 at 0.05 intervals as the learner level increases, and is 0.7 at the minimum in the same way as for Fig. 9.

The values in the bottom row are used in a case where the learner level is independently used as the difficulty (level) described below.

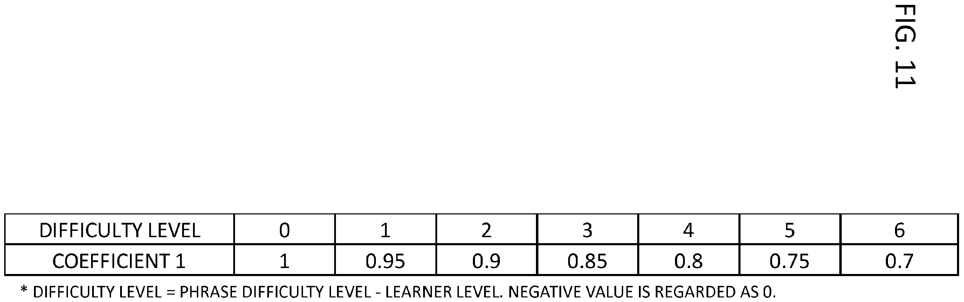

Fig. 11 is a correspondence table that shows coefficients 1 corresponding to difficulty levels, each of which is a combination of a word (phrase) difficulty level and a learner level in the learning support system according to Embodiment 1 of the present invention and that is stored in the correspondence table storage unit 115 in Fig. 2.

The top row represents difficulty levels, each being a difference obtained by subtracting the learner level illustrated in Fig. 10 from the phrase difficulty level illustrated in Fig. 9.

Both the phrase difficulty level and the learner level are indicated in seven ranks from 1 to 7, and thus the difference takes a value from -6 to +6.

However, all negative values are regarded as 0, and thus the difficulty level is indicated in seven levels from 0 to 6.

The bottom row represents the values of coefficient 1 corresponding to the difficulty levels in the top row.

The value of coefficient 1 is 1 in a standard state, decreases to be smaller than 1 at 0.05 intervals as the difficulty increases, and is 0.7 at the minimum.

Fig. 12 is a flowchart illustrating a processing procedure of calculating coefficient 1 of a predetermined period of time for a phrase to be learned by the user in the learning support system according to Embodiment 1 of the present invention.

When the process proceeds to the coefficient 1 calculation process in step S41 in Fig. 8, the subroutine process in Fig. 12 starts.

In step S51, the main control unit (CPU) 10 calculates a difficulty level by subtracting a learner level from a phrase difficulty level for the extracted phrase.

In particular, the main control unit (CPU) 10 calculates the difference between the phrase difficulty level stored in the phrase-related information storage unit 113 and the learner level stored in the user setting storage unit 111.

If the difference is a negative value, the main control unit (CPU) 10 also performs a process of setting the value to 0, although not illustrated.

For example, when the user is an eighth grader, and in the case of "Internet" in the fourth row of the example data structure of the phrase-related information storage unit illustrated in Fig. 4, the learner level in the correspondence table in Fig. 10 is "2" and the phrase difficulty level in the correspondence tables in Figs. 4 and 9 is "4", and thus the difficulty level is "4 - 2 = 2".

In step S52, the main control unit (CPU) 10 obtains coefficient 1 from the correspondence table in Fig. 11 based on the difficulty level obtained in step S51.

For example, in the foregoing example of "Internet", "0.9" corresponding to the difficulty level "2" is obtained as coefficient 1.

Subsequently, the subroutine process in Fig. 12 is finished, and the process proceeds to step S42 in Fig. 8.

<Coefficient 2 calculation process>

The following describes a calculation processing procedure for coefficient 2 with reference to Figs. 13 to 16.

Fig. 13 is a flowchart illustrating a processing procedure of calculating coefficient 2 of a predetermined period of time for a phrase to be learned by the user in the learning support system according to Embodiment 1 of the present invention.

As described regarding the example data structure of the phrase-related information storage unit in Fig. 4, the linguistic similarity of an phrase to a native language is determined in accordance with, for example, whether or not the phrase is a loanword, whether or not the type of character is similar, whether or not the spelling is similar, whether or not the pronunciation is similar, and the like.

The similarity of the phrase is calculated based on these four items stored in the phrase-related information storage unit 113, and coefficient 2 is adjusted to provide an opportunity for iterative learning earlier as the similarity decreases.

When the process proceeds to the coefficient 2 calculation process in step S42 in Fig. 8, the subroutine process in Fig. 13 starts.

In step S61, the main control unit (CPU) 10 determines whether or not the extracted phrase is a loanword.

The main control unit (CPU) 10 refers to the loanword data stored in the phrase-related information storage unit 113, stores level 1 as "1" in the RAM if the extracted phrase is a loanword (Y) (step S62), and stores level 1 as "0" in the RAM if the extracted phrase is not a loanword (N) (step S63). Subsequently, the process proceeds to step S64.

For example, regarding "Internet" in the fourth row of the example data structure of the phrase-related information storage unit in Fig. 4, the column of loanword gives "Y 1", and thus level 1 is stored as "1" in the RAM.

In step S64, the main control unit (CPU) 10 determines whether or not the type of character is similar.

The main control unit (CPU) 10 refers to the similarity in type of character stored in the phrase-related information storage unit 113, stores level 2 as "1" in the RAM if the type of character is similar (step S65), and stores level 2 as "0" in the RAM if the type of character is not similar (step S66).

Subsequently, the process proceeds to step S67.

For example, regarding "Internet" in the fourth row of the example data structure of the phrase-related information storage unit in Fig. 4, the similarity in type of character is "not similar: 0", and thus level 2 is stored as "0" in the RAM.

In step S67, the main control unit (CPU) 10 refers to the similarity in spelling stored in the phrase-related information storage unit 113, stores level 3 as "2" in the RAM if the spelling is similar (step S69), stores level 3 as "1" in the RAM if the spelling is predictable (step S68), and stores level 3 as "0" in the RAM if the spelling is not similar (step S70).

Subsequently, the process proceeds to step S71.

For example, regarding "Internet" in the fourth row of the example data structure of the phrase-related information storage unit in Fig. 4, the similarity in spelling is "predictable: 1", and thus level 3 is stored as "1" in the RAM.

In step S71, the main control unit (CPU) 10 determines whether or not the pronunciation is similar.

The main control unit (CPU) 10 refers to the similarity in pronunciation stored in the phrase-related information storage unit 113, stores level 4 as "2" in the RAM if the pronunciation is similar (step S72), and stores level 4 as "0" in the RAM if the pronunciation is not similar (step S73).

Subsequently, the process proceeds to step S74.

For example, regarding "Internet" in the fourth row of the example data structure of the phrase-related information storage unit in Fig. 4, the similarity in pronunciation is "similar: 2", and thus level 4 is stored as "2" in the RAM.

In step S74, the main control unit (CPU) 10 calculates a similarity sum by calculating the sum of level 1 to level 4 stored in the RAM and adding 1 to the sum.

For example, regarding "Internet" in the fourth row of the example data structure of the phrase-related information storage unit in Fig. 4, level 1 is "1", level 2 is "0", level 3 is "1", and level 4 is "2".

Thus, the similarity sum is "5".

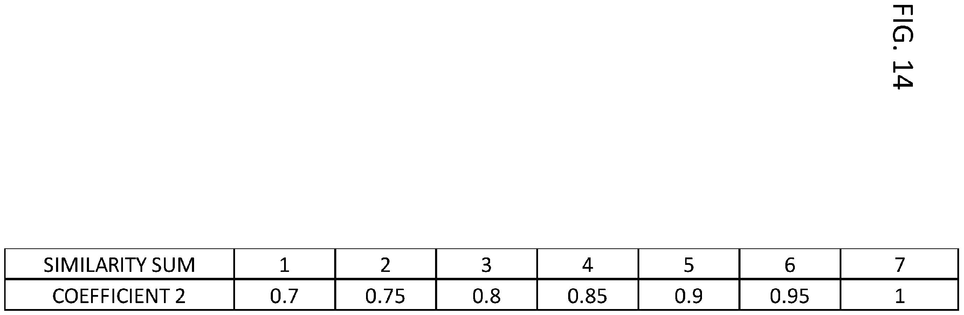

In step S75, the main control unit (CPU) 10 obtains coefficient 2 based on the obtained similarity sum by referring to the correspondence table for the similarity sum and coefficient 2 in Fig. 14 described below.

For example, in the foregoing case of "Internet", "0.9" corresponding to the similarity sum "5" in the correspondence table in Fig. 14 is obtained as coefficient 2.

Subsequently, the subroutine process in Fig. 13 is finished, and the process proceeds to step S43 in Fig. 8.

Fig. 14 is a correspondence table that shows coefficients 2 corresponding to similarity sums of a phrase to be learned by the user to the native language in the learning support system according to Embodiment 1 of the present invention and that is stored in the correspondence table storage unit 115 in Fig. 2.

The top row represents similarity sums obtained in step S74 in the flowchart illustrated in Fig. 13, indicated in seven ranks from 1 to 7.

The bottom row represents the values of coefficient 2 corresponding to the similarity sums.

The value is 1 in a standard state, decreases to be smaller than 1 at 0.05 intervals as the similarity decreases so as to provide an opportunity for iterative learning at more appropriate timing, and is 0.7 at the minimum.

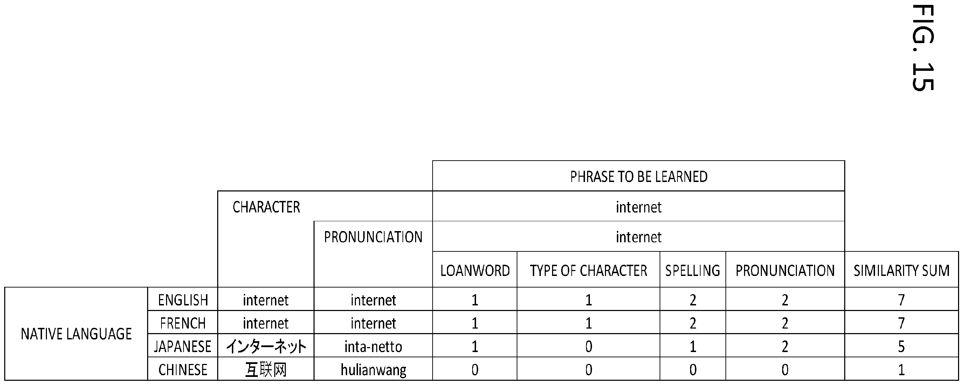

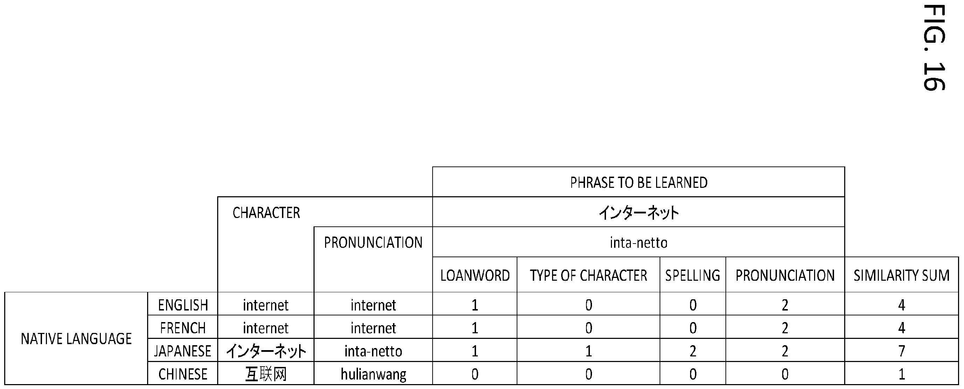

Figs. 15 and 16 illustrate example samples showing the similarity of a phrase to be learned by the user to the native language in the learning support system according to Embodiment 1 of the present invention.

In Figs. 15 and 16, the top two rows show a phrase to be learned by the user and its pronunciation.

On the left side, items of the user's native language, English, French, Japanese, and Chinese in order from the top row, are provided, and their characters and pronunciations in individual native languages corresponding to the phrase to be learned are shown in the third and fourth columns from the left.

In the fifth to eighth columns from the left, four items for evaluating the similarity of the phrase to be learned to the native languages, that is, loanword, type of character, spelling, and pronunciation, are provided in order, and the values of individual levels based on the flowchart of calculating coefficient 2 in Fig. 13 are shown.

In addition, similarity sums used in the correspondence table in Fig. 14 are shown in the rightmost column.

Fig. 15 illustrates similarity sums for individual native speakers when learning English phrase "Internet".

For example, in the case of a learner whose native language is Japanese, the third row is referred to.

The similarity sum is "5", with loanword "Y 1", type of character "not similar: 0", spelling "predictable: 1", and pronunciation "similar: 2".

On the other hand, in the case of a learner whose native language is English or French, the similarity sum is "7".

The similarity sum for a learner whose native language is Chinese is "1".

Fig. 16 illustrates similarity sums for individual native speakers when learning a Japanese phrase " ".

For example, インターネット earner whose native language is English, the first row is referred to.

The similarity sum is "4", with loanword "Y: 1", type of character "not similar: 0", spelling " not similar: 0", and pronunciation "similar: 2".

On the other hand, in the case of a learner whose native language is Japanese, the similarity sum is "7".

The similarity sum for a learner whose native language is Chinese is "1".

Coefficient 2 varies from 0.7 to 1 based on the correspondence table in Fig. 14 depending on a similarity sum.

Thus, even in the case of learning the same phrase, the predetermined period of time is different according to a native language, and an opportunity for iterative learning can be provided at more appropriate timing for each phrase to be learned depending on a user.

A description has been given above of (3) a processing procedure of calculating a predetermined period of time and an elapsed time for a phrase to be learned by the user, with reference to the flowcharts in Figs. 8, 12, and 13.

For example, in the case of "Internet" in the fifth row of the example data structure of the phrase-related information storage unit in Fig. 4, the predetermined period of time is 55 hours depending on equation (3), that is, in step S43 in Fig. 8, when both coefficient 1 and coefficient 2 are 1 as the standard.

On the other hand, as described above, since coefficient 1 is 0.9 in a case where the phrase difficulty and the learner level (in the example, eighth grade) are taken into consideration, a predetermined period of time calculated depending on equation (3), that is, in step S43 in Fig. 8, is shortened to 49 hours.

Furthermore, since coefficient 2 is 0.9 in a case where the similarity of a phrase to a native language (for example, Japanese) is taken into consideration, a predetermined period of time is calculated to be more shortened to 33 hours.

Thus, with the above matters being taken into consideration, it becomes possible to provide an opportunity for iterative learning at more appropriate timing for each phrase to be learned depending on a user.

As described above, according to Embodiment 1 of the present invention, adoption of the above-described configuration makes it possible to provide an opportunity for iterative learning at more appropriate timing for each phrase to be learned depending on a user.

Accordingly, a learning support system, method, and program for enhancing an effect of learning of a foreign language can be provided.

[Embodiment 2]

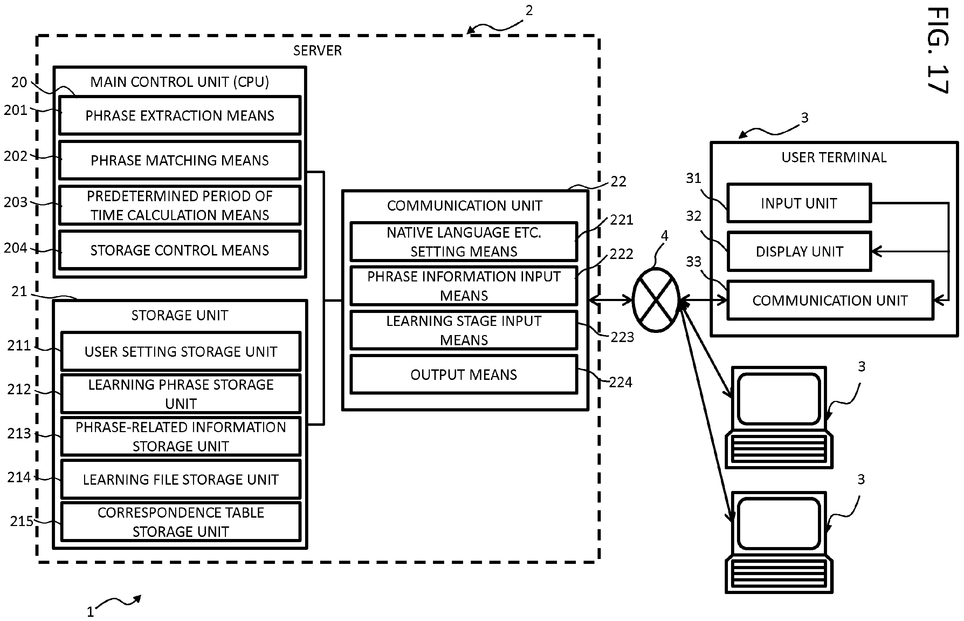

Fig. 17 is a diagram illustrating an overall configuration of a learning support system according to Embodiment 2 of the present invention.

The learning support system 1 has a configuration where a server 2 and user terminals 3 are connected to the network 4.

The server 2 is comprised of a main control unit (CPU) 20 that controls the overall system in a centralized manner, a storage unit 21 that stores therein various pieces of information, and a communication unit 22 for performing communication with the user terminals 3 via the network 4.

The main control unit (CPU) 20 implements phrase extraction means 201, phrase matching means 202, predetermined period of time calculation means 203, storage control means 204, and various types of processing means and determination means or the like, via a program such as an operating system, a program specifying a procedure of this learning system, and the like.

The phrase extraction means 201, the phrase matching means 202, the predetermined period of time calculation means 203, and the storage control means 204 have functions similar to those of the phrase extraction means 101, the phrase matching means 102, the predetermined period of time calculation means 103, and the storage control means 104 in Fig. 1.

The storage unit 21 is comprised of a volatile or non-volatile semiconductor device such as a RAM or ROM, and an auxiliary storage device such as a hard disk or optical disc.

The storage unit 21 comprises a user setting storage unit 211, a learning phrase storage unit 212, a phrase-related information storage unit 213, a learning file storage unit 214, a correspondence table storage unit 215, and the like.

The communication unit 22 ensures communication with the user terminals 3 via the network 4.

The communication unit 22 has a function as native language etc. setting means 221 for receiving setting data of a native language and so forth transmitted from the user terminals 3 using a protocol such as a TCP/IP, phrase information input means 222 for receiving phrase information input data, learning stage input means 223 for receiving input data of a learning stage, and output means 224 for transmitting output information to be output to a display unit of the user terminals 3.

Each user terminal 3 is comprised of an input unit 31, a display unit 32, and a communication unit 33.

The input unit 31 comprises a keyboard, a mouse or a pointing device such as a trackball.

The input unit 31 is used to input setting information of a native language and so forth of a user, phrase information to be learned by the user, learning stage information about a phrase, or the like.

The display unit 32 includes a display or the like, and is used to display information input from the input unit 31 and output information transmitted from the server 2.

The communication unit 33 is used to transmit various pieces of information data input from the input unit 31 to the server 2 or to receive output information from the server 2 via the network 4.

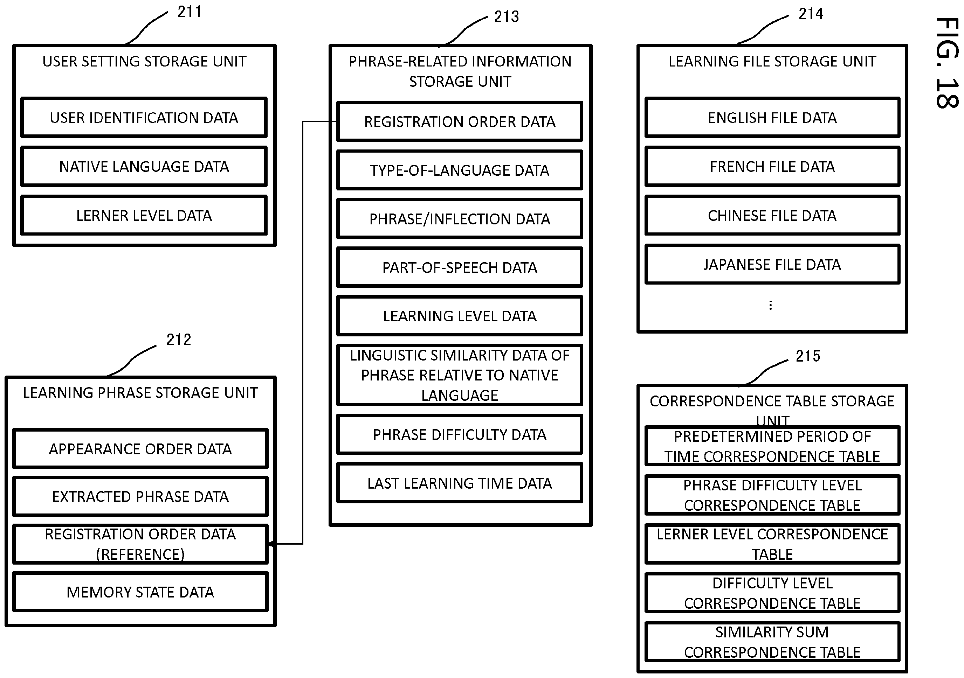

Fig. 18 is a diagram schematically illustrating an example data structure in the storage unit according to Embodiment 2 of the present invention.

The learning phrase storage unit 212, the phrase-related information storage unit 213, the learning file storage unit 214, and the correspondence table storage unit 215 hold data similar to that in the learning phrase storage unit 112, the phrase-related information storage unit 113, the learning file storage unit 114 and the correspondence table storage unit 115 in Fig. 2, respectively.

The user setting storage unit 211 is different in holding user identification data in addition to the native language data and learner level data held in the user setting storage unit 111.

This is because, in a case where the plurality of users use the server from the plurality of user terminals 3, it is necessary for each user to store the learning phrase storage unit 212, the phrase-related information storage unit 213, and the learning file storage unit 214.

The specific data structures of the learning phrase storage unit 212 and the phrase-related information storage unit 213 are similar to the example data structures in Figs. 3 and 4, respectively.

The following describes a basic operation of the learning support system according to Embodiment 2 of the present invention with reference to Fig. 17.

Each user terminal 3 used by a user connects to the server 2 via the network 4.

The user terminal 3 transmits to the server 2 native language etc. setting information including user identification data, native language data, and learner level data input by the user with the input unit 31, through the communication unit 33 via the network 4.

The server 2 receives the native language etc. setting information transmitted by the user terminal 3 through the native language etc. setting means 221 of the communication unit 22, and stores it in the user setting storage unit 211.

The server 2 reserves the learning phrase storage unit 212 in the RAM of the storage unit 21 based on the user identification data stored in the user setting storage unit 211.

And the server 2 specifies the phrase-related information storage unit 213 that has been established through the previous learning by the user.

The subsequent operation is similar to that of the learning support system according to Embodiment 1 of the present invention.

As described above, according to Embodiment 2 of the present invention, adoption of the above-described configuration makes it possible to provide an opportunity for iterative learning at more appropriate timing for each phrase to be learned depending on each of a plurality of users.

Accordingly, a learning support system, method, and program for enhancing an effect of learning of a foreign language can be provided.

The present invention is not limited to the above-described embodiments.

For example, in a learning support system according to an embodiment of the present invention, only a phrase difficulty level may be used as an index of a difficulty level that is used to calculate coefficient 1.

As phrase difficulty, the length of characters of a phrase may be used as an index.

Furthermore, as phrase difficulty, an arithmetic mean or the like of a learner's grade indicating the number of years of experience desired for learning and the length of characters of a phrase may be used.

Alternatively, phrase difficulty may have more ranks, and the corresponding value of coefficient 1 may be set from 0.5 to 1, for example.

Furthermore, as phrase difficulty, a result of a questionnaire about difficulty in memorizing each phrase may be used as an index, for example.

The difficulty in memorizing a phrase significantly varies according to the native language of a learner.

Thus, for example, 1000 people speaking various languages as their native language are caused to memorize each of phrases to be learned, and based on a result of a memory test conducted after a certain period of time, the difficulty in memorization for each word is statistically calculated.

Memorization difficulty data obtained accordingly may be used as phrase difficulty data.

In a learning support system according to an embodiment of the present invention, any one of loanword, type of character, spelling, and pronunciation, or a combination of two or more of them may be used as an index of similarity used to calculate coefficient 2.

Furthermore, in a learning support system according to an embodiment of the present invention, the similarity of a phrase to a native language may be used as an index for calculating coefficient 1, and the phrase difficulty or learner level may be used as an index for calculating coefficient 2.

In a learning support system according to an embodiment of the present invention, either of coefficient 1 or coefficient 2 may be a constant.

Accordingly, it becomes possible to set a predetermined period of time more accurately or more moderately, and an effect of learning of a foreign language can be further enhanced depending on a user.

In a learning support system according to an embodiment of the present invention, a difficulty level of an phrase that is too easy and need not be reviewed, or a difficulty level of an phrase that is too difficult and has a little learning effect may be set as learning phrase exclusion level data that is input from a user with the native language etc. setting means 131, and the learning phrase exclusion level data may be stored in the user setting storage unit 111.

Together with or instead of the learning phrase exclusion level data, learning phrase limitation level data for limiting a learning level may be stored in the user setting storage unit 111.

Furthermore, part-of-speech specification data for limiting or excluding a part of speech of phrases to be learned may be stored in the user setting storage unit 111.

In the flowchart in Fig. 5, for example, a determination procedure of excluding or limiting a phrase to be learned may be provided between step S4 and step S5.

In the case of a phrase to be excluded, the process may proceed to step S9, whereas in the case of an phrase to be limited, the process may proceed to step S5.

As a result of limiting phrases to be learned, an opportunity for iterative learning can be provided more appropriately.

In a learning support system according to an embodiment of the present invention, a third memory state may be provided as memory data stored in the learning phrase storage unit 112, and display color 3 corresponding to the third memory state may be set.

Display color 3 has a highlighting style different from that of display color 1, for example.

As the highlighting style, for example, the character color or background color of an phrase may be different from display color 1, or characters of an phrase may be outlined, shaded, embossed, or raised.

In the flowchart in Fig. 6, for example, step S21 has a branch into "learning not completed this time: 2" as the third memory state, and output in display color 3 is performed in the corresponding case.

In addition, at the selection in step S27, "learning not completed: 0" may be replaced with "learning not completed this time: 2".

Accordingly, the phrase recognized by the user as not having been completely learned this time becomes clear, and an effect of supporting learning according to a user can be further enhanced.

In addition, in a learning support system according to an embodiment of the present invention, the last date and time when the user selected a phrase, for example, may be stored as the last learning time data stored in the phrase-related information storage unit 113.

In the flowchart in Fig. 6, the procedure of storing the system date and time in the phrase-related information storage unit 113 in step S30 may be inserted between step S26 and step S27.

Accordingly, regardless of whether or not learning of a phrase has been completed, an elapsed time can be calculated based on the date and time when the phrase was learned last time, and a display style can be determined by comparing the elapsed time with a predetermined period of time.

A learning support system according to an embodiment of the present invention can be used as a word book, to view sentences, and to learn terminology or the like.

Not only words or sentences of a single language, but also corresponding words or sentences of a plurality of languages may be simultaneously output (displayed).

Accordingly, in a case where a user learns a second foreign language, a native language and a first foreign language can also be simultaneously output (displayed), and a learning effect of the foreign languages can be further enhanced.

In addition, in a learning support system according to an embodiment of the present invention, in a case where a user learns a second foreign language, a predetermined period of time can be calculated in consideration of the similarity to not only a native language but also a first foreign language that the user has already learned.

For example, the first foreign language data that is input from the user with the native language etc. setting means 131, is stored in the user setting storage unit 111 together with native language data.

The processing procedure for coefficient 2 in step S42 in Fig. 8 is performed on each of the native language and the first foreign language, and an arithmetic mean of the obtained values of coefficient 2 may be calculated, or the minimum value of the obtained values may be adopted.

For a user who has already started learning a plurality of languages, a predetermined period of time can be also calculated in consideration of the similarity to a second foreign language and a third foreign language.

In this case, the predetermined period of time may be calculated by weighing depending on the degrees of achievement of the user in the individual foreign languages.

For example, the native language may be weighed with 2/3 and a target foreign language may be weighed with 1/3.

Accordingly, more appropriate learning support can be provided depending on a user who is learning a plurality of languages.

In addition, in a learning support system according to an embodiment of the present invention, if a result obtained by adding 1 to the learning level exceeds "9" in step S28 of the flowchart in Fig. 6, the value as is may be stored as the learning level in the phrase-related information storage unit 113.

At the next learning, a phrase at a learning level exceeding 9 stored in the phrase-related information storage unit 113 may be automatically set as learning phrase exclusion level data.

Also, in the case of finishing learning in step S25, phrase information whose learning level exceeds 9 may be deleted from the phrase-related information storage unit 113.

Accordingly, a phrase to be learned can be made clearer, and more effective learning support can be provided.

In a learning support system according to an embodiment of the present invention, for example, the following n-th order function may be used instead of the exponential function in equation (3) that is used to calculate a predetermined period of time corresponding to the learning level in Fig. 7.

Predetermined period of time = coefficient 1 $\times$ (coefficient 2 $\times$ learning level)" $\cdots$ (4) Where, n is a natural number such as 1, 2, or 3, for example.

Furthermore, for example, the following fractional function, irrational function, or the like may be used to calculate a predetermined period of time.

Predetermined period of time = coefficient 1 $\times$ (1 - coefficient 2/learning level) $\cdots$ (5)

Predetermined period of time = coefficient 1 $\times$ $\sqrt{}$(coefficient 2 $\times$ learning level) $\cdots$ (6)

The learning support system of the present invention has been described above using specific embodiments, but the present invention is not limited to these embodiments.

It is possible for a person skilled in the art to add various changes or improvements to the configuration and function of the present invention according to the above embodiments or other embodiments without deviating from the gist of the present invention.

The learning support system of the present invention is also implemented by a program that causes a computer to function as a learning support system.

This program may be stored in a computer-readable storage medium.

The storage medium storing the program therein may be the ROM itself of the learning support system illustrated in Fig. 1, or may be a readable CD-ROM or the like that is a storage medium inserted into a program reading device such as a CD-ROM drive provided as an external storage device.

Alternatively, the storage medium may be a magnetic tape, a cassette tape, a flexible disk, a hard disk, an MO/MD/DVD or the like, or a semiconductor memory.

All publications, patents, and patent applications cited in this description are incorporated herein by reference in their entirety.

In addition, the disclosure of JP patent application No. 2016-234721 filed on December 2, 2016 including the description, claims, and drawings is incorporated herein by reference in their entirety.

[Reference Signs List]

| | |
|---|---|
| 1 | learning support system |
| 2 | server |
| 3 | user terminal |
| 4 | network |
| 10 | main control unit (CPU) |
| 11 | storage unit |
| 12 | bus line |
| 13 | input unit |
| 14 | output (display) unit |
| 15 | communication unit |
| 20 | main control unit (CPU) |
| 21 | storage unit |
| 22 | communication unit |
| 31 | input unit |
| 32 | display unit |
| 33 | communication unit |
| 101 | phrase extraction means |
| 102 | phrase matching means |

103    predetermined period of time calculation means
104    storage control means
111    user setting storage unit
112    learning phrase storage unit
113    phrase-related information storage unit
114    learning file storage unit
115    correspondence table storage unit
131    native language etc. setting means
132    phrase information input means
133    learning stage input means
201    phrase extraction means
202    phrase matching means
203    predetermined period of time calculation means
204    storage control means
211    user setting storage unit
212    learning phrase storage unit
213    phrase-related information storage unit
214    learning file storage unit
215    correspondence table storage unit
221    native language etc. setting means
222    phrase information input means
223    learning stage input means
224    output means

**Claims**

1.  A learning support system comprising:

    native language setting means for setting a native language of a user;
    learning phrase storage means for storing phrase information to be learned by the user together with a learning stage;
    predetermined period of time calculation means for calculating a predetermined period of time based on linguistic similarity of the phrase information to be learned by the user to the native language input by the native language setting means;
    storage control means for storing the learning stage, stored in the learning phrase storage means, as a first memory state if learning has not been completed, storing the learning stage as a second memory state if learning has been completed, and storing the learning stage as the first memory state again if the predetermined period of time has elapsed after learning was completed; and
    output means for outputting the phrase information to be learned by the user in a first output style and a second output style depending on the first memory state and the second memory state, respectively, stored in the learning phrase storage means by the storage control means.

2.  The learning support system according to Claim 1, further comprising:

    learning stage input means for inputting the learning stage from the user for the phrase information to be learned by the user,
    wherein
    an input by the learning stage input means
    is stored as the first memory state by the storage control means if learning has not been completed, and
    is stored as the second memory state by the storage control means if learning has been completed.

3.  The learning support system according to Claim 1 or 2, further comprising:

    phrase information input means for inputting the phrase information to be learned by the user;
    a phrase-related information storage unit for storing related information that is related to a phrase, the related information including the similarity; and
    phrase matching means for determining whether or not the phrase information input by the phrase information input means and stored in the learning phrase storage means is stored in the phrase-related information storage unit,

wherein the storage control means stores the learning stage as the first memory state regarding phrase information that is not stored in the phrase-related information storage unit based on a matching result obtained by the phrase matching means.

4. The learning support system according to any of Claims 1 to 3, wherein
the similarity includes any of a variable indicating whether or not the phrase information to be learned is a loanword in the native language, a variable indicating whether or not a type of characters representing the phrase information to be learned is similar to a type of characters of the native language, a variable indicating whether or not spelling of the phrase information to be learned is similar to spelling of the native language, and a variable indicating whether or not pronunciation of the phrase information to be learned is similar to pronunciation of the native language, and the predetermined period of time calculation means determines the predetermined period of time depending on the similarity.

5. The learning support system according to any of Claims 1 to 4, wherein the predetermined period of time calculation means determines the predetermined period of time based on difficulty of a phrase in a language to be learned by the user.

6. The learning support system according to any of Claims 1 to 5, wherein the predetermined period of time calculation means determines the predetermined period of time based on a learner level of the user for a language of a phrase to be learned.

7. A learning support method in which a learning support system executes:

a native language setting step of setting a native language of a user;
a learning phrase storage step of storing phrase information to be learned by the user together with a learning stage;
a predetermined period of time calculation step of calculating a predetermined period of time based on linguistic similarity of the phrase information to be learned by the user to the native language input by the native language setting step;
a storage control step of storing the learning stage, stored in the learning phrase storage step, as a first memory state if learning has not been completed, storing the learning stage as a second memory state if learning has been completed, and storing the learning stage as the first memory state again if the predetermined period of time has elapsed after learning was completed; and
an output step of outputting the phrase information to be learned by the user in a first output style and a second output style depending on the first memory state and the second memory state, respectively, stored in the learning phrase storage step by the storage control step.

8. A program for causing a computer to function as a learning support system comprising:

native language setting means for setting a native language of a user;
learning phrase storage means for storing therein phrase information to be learned by the user together with a learning stage;
predetermined period of time calculation means for calculating a predetermined period of time based on linguistic similarity of the phrase information to be learned by the user to the native language input by the native language setting means;
storage control means for storing the learning stage stored in the learning phrase storage means as a first memory state if learning has not been completed, storing the learning stage as a second memory state if learning has been completed, and storing the learning stage as the first memory state again if the predetermined period of time has elapsed after learning was completed; and
output means for outputting the phrase information to be learned by the user in a first output style and a second output style depending on the first memory state and the second memory state, respectively, stored in the learning phrase storage means by the storage control means.

# FIG.1

**MAIN CONTROL UNIT (CPU)** — 10

- PHRASE EXTRACTION MEANS — 101
- PHRASE MATCHING MEANS — 102
- PREDETERMINED PERIOD OF TIME CALCULATION MEANS — 103
- STORAGE CONTROL MEANS — 104

**STORAGE UNIT** — 11

- USER SETTING STORAGE UNIT — 111
- LEARNING PHRASE STORAGE UNIT — 112
- PHRASE-RELATED INFORMATION STORAGE UNIT — 113
- LEARNING FILE STORAGE UNIT — 114
- CORRESPONDENCE TABLE STORAGE UNIT — 115

12

1

**INPUT UNIT** — 13

- NATIVE LANGUAGE ETC. SETTING MEANS — 131
- PHRASE INFORMATION INPUT MEANS — 132
- LEARNING STAGE INPUT MEANS — 133

**OUTPUT (DISPLAY) UNIT** — 14

**COMMUNICATION UNIT** — 15

4

FIG.2

EP 3 457 386 A1

111

**USER SETTING STORAGE UNIT**

NATIVE LANGUAGE DATA

LERNER LEVEL DATA

113

**PHRASE-RELATED INFORMATION STORAGE UNIT**

REGISTRATION ORDER DATA

TYPE-OF-LANGUAGE DATA

PHRASE/INFLECTION DATA

PART-OF-SPEECH DATA

LEARNING LEVEL DATA

LINGUISTIC SIMILARITY DATA OF PHRASE RELATIVE TO NATIVE LANGUAGE

PHRASE DIFFICULTY DATA

LAST LEARNING TIME DATA

114

**LEARNING FILE STORAGE UNIT**

ENGLISH FILE DATA

FRENCH FILE DATA

CHINESE FILE DATA

JAPANESE FILE DATA

⋮

112

**LEARNING PHRASE STORAGE UNIT**

APPEARANCE ORDER DATA

EXTRACTED PHRASE DATA

REGISTRATION ORDER DATA (REFERENCE)

MEMORY STATE DATA

115

**CORRESPONDENCE TABLE STORAGE UNIT**

PREDETERMINED PERIOD OF TIME CORRESPONDENCE TABLE

PHRASE DIFFICULTY LEVEL CORRESPONDENCE TABLE

LERNER LEVEL CORRESPONDENCE TABLE

DIFFICULTY LEVEL CORRESPONDENCE TABLE

SIMILARITY SUM CORRESPONDENCE TABLE

FIG.3

| APPEARANCE ID | EXTRACTED PHRASE | REGISTRATION ID (REFERENCE) | MEMORY STATE |
|---|---|---|---|
| 1 | Hi | 2 | LEARNING COMPLETED: 1 |
| 2 | Michael | 10 | LEARNING NOT COMPLETED: 0 |
| 3 | nice | 5 | LEARNING COMPLETED: 1 |
| 4 | to | 7 | LEARNING NOT COMPLETED: 0 |
| 5 | meet | 3 | LEARNING COMPLETED: 1 |
| 6 | you | 9 | LEARNING NOT COMPLETED: 0 |

FIG.4

| REGISTRATION ID | TYPE OF LANGUAGE | BASE FORM | INFLECTION DATA | | | PART OF SPEECH | LEARNING LEVEL | LINGUISTIC SIMILARITY DATA OF PHRASE | | | | PHRASE DIFFICULTY LEVEL | LAST LEARNING TIME DATA |
|---|---|---|---|---|---|---|---|---|---|---|---|---|---|
| | | | PAST TENSE | PLURAL FORM | SUPERLATIVE | | | LOANWORD | SIMILARITY IN TYPE OF CHARACTER | SIMILARITY IN SPELLING | SIMILARITY IN PRONUNCIATION | | |
| 1 | ENGLISH | door | | doors | | NOUN: 1 | 1 | Y: 1 | NOT SIMILAR: 0 | PREDICTABLE: 1 | SIMILAR: 2 | EIGHTH GRADE: 2 | 2016/9/20 10:05 |
| 2 | ENGLISH | hi | | | | OTHERS: 6 | 2 | N: 0 | NOT SIMILAR: 0 | PREDICTABLE: 1 | NOT SIMILAR: 0 | SEVENTH GRADE: 1 | 2016/10/05/ 18:03:30 |
| 3 | ENGLISH | meet | met | | | VERB: 2 | 3 | N: 0 | NOT SIMILAR: 0 | NOT SIMILAR: 0 | NOT SIMILAR: 0 | NINTH GRADE: 3 | 2016/8/16 6:35 |
| 4 | ENGLISH | Internet | | | | NOUN: 1 | 4 | Y: 1 | NOT SIMILAR: 0 | PREDICTABLE: 1 | SIMILAR: 2 | TENTH GRADE: 4 | 2016/9/21 10:05 |
| 5 | ENGLISH | nice | | | nicest | ADJECTIVE: 3 | 5 | Y: 1 | NOT SIMILAR: 0 | PREDICTABLE: 1 | SIMILAR: 2 | EIGHTH GRADE: 2 | 2016/10/05/ 18:03:31 |
| 6 | FRENCH | à | | | | OTHERS: 6 | 1 | N: 0 | NOT SIMILAR: 0 | NOT SIMILAR: 0 | NOT SIMILAR: 0 | UNIVERSITY: 7 | 2016/8/17 6:35 |
| 7 | ENGLISH | to | | | | OTHERS: 6 | 7 | N: 0 | NOT SIMILAR: 0 | PREDICTABLE: 1 | NOT SIMILAR: 0 | SEVENTH GRADE: 1 | 2016/9/22 10:05 |
| 8 | CHINESE | 普通 | | | | ADVERB: 4 | 8 | Y: 1 | SIMILAR: 1 | SIMILAR: 2 | NOT SIMILAR: 0 | UNIVERSITY: 7 | 2016/10/05/ 18:03:32 |
| 9 | ENGLISH | you | | | | OTHERS: 6 | 9 | N: 0 | NOT SIMILAR: 0 | PREDICTABLE: 1 | NOT SIMILAR: 2 | ELEVENTH GRADE: 5 | 2016/8/18 6:35 |
| 10 | ENGLISH | Michael | | | | PROPER NOUN: 5 | 0 | N: 0 | NOT SIMILAR: 0 | NOT SIMILAR: 0 | NOT SIMILAR: 0 | TWELFTH GRADE: 6 | 2016/9/23 10:05 |

* "Michael" IN TENTH ROW IS EXAMPLE OF NEWLY STORED WORD.

# FIG.5

```
            ┌──────────────┐
            │    START     │
            └──────┬───────┘
                   │                          S1
        ┌──────────▼────────────┐
        │ RECEIVE SETTING INFORMATION │
        └──────────┬────────────┘
                   │                          S2
        ┌──────────▼────────────┐
        │ READ INTO LEARNING PHRASE STORAGE │
        │           UNIT         │
        └──────────┬────────────┘
                   │                          S3
        ┌──────────▼────────────┐
        │ PHRASE EXTRACTION PROCESS │
        └──────────┬────────────┘
                   │                          S4
        ┌──────────▼────────────┐       NO MATCH
        │ MATCH EXTRACTED PHRASE WITH │──────────────┐
        │ DATA IN PHRASE-RELATED      │              │
        │ INFORMATION STORAGE UNIT    │              │
        └──────────┬────────────┘              │
                MATCH │               S5        │        S6
        ┌──────────▼────────────┐      ┌───────▼─────────────┐
        │ PREDETERMINED PERIOD OF │      │ STORE NEW WORD IN PHRASE-RELATED │
        │ TIME CALCULATION PROCESS │      │ INFORMATION STORAGE UNIT │
        └──────────┬────────────┘      └───────┬─────────────┘
                   │            S7              │
        ┌──────────▼────────────┐  Y           │
        │ ELAPSED TIME ≧        │──────────────┤
        │ PREDETERMINED PERIOD OF TIME? │      │
        └──────────┬────────────┘              │
                 N │            S8             │         S9
        ┌──────────▼────────────┐      ┌───────▼─────────────┐
        │ STORE LEARNING COMPLETED: 1 │      │ STORE LEARNING NOT COMPLETED: 0 │
        └──────────┬────────────┘      └───────┬─────────────┘
           No      │            S10            │
        ┌──────────▼────────────┐◄─────────────┘
        │ HAVE ALL PHRASES BEEN  │
        │      EXTRACTED?        │
        └──────────┬────────────┘
                Yes │
            ┌───────▼────────┐
            │ FINISH EXTRACTING PHRASE │
            └────────────────┘
```

# FIG.6

START OUTPUTTING PHRASE

S21

WHAT IS MEMORY STATE (LEARNING STAGE)? — LEARNING COMPLETED: 1

LEARNING NOT COMPLETED: 0

S22 — OUTPUT IN DISPLAY COLOR 1

S23 — OUTPUT IN DISPLAY COLOR 2

S24 — HAVE ALL PHRASES BEEN OUTPUT?   N

Y

S25 — HAS USER CHOSEN TO FINISH LEARNING?   Y → FINISH LEARNING

N

S26 — HAS USER SELECTED EXTRACTED PHRASE?   N

Y

S27 — WHAT IS LEARNING STAGE?

LEARNING COMPLETED: 1    LEARNING NOT COMPLETED: 0

S28 — LEARNING LEVEL + 1

S31 — LEARNING LEVEL - 1

S29 — STORE LEARNING COMPLETED

S32 — STORE LEARNING NOT COMPLETED

S30 — RECORD SYSTEM DATE AND TIME

FIG.7

| LEARNING LEVEL | 1 | 2 | 3 | 4 | 5 | 6 | 7 | 8 | 9 |
|---|---|---|---|---|---|---|---|---|---|
| PREDETERMINED PERIOD OF TIME (HOURS) | 3 | 7 | 20 | 55 | 148 | 403 | 1097 | 2981 | 8103 |

* COEFFICIENT 1 = 1, COEFFICIENT 2 = 1

# FIG.8

START PREDETERMINED PERIOD OF TIME CALCULATION PROCESS

COEFFICIENT 1 CALCULATION PROCESS — S41

COEFFICIENT 2 CALCULATION PROCESS — S42

REDETERMINED PERIOD OF TIME= COEFFICIENT 1 x Exp (COEFFICIENT 2 x  LEARNING LEVEL) — S43

ELAPSED TIME = CURRENT DATE AND TIME OF SYSTEM - LAST LEARNING TIME DATA — S44

FINISH PREDETERMINED PERIOD OF TIME CALCULATION PROCESS

FIG.9

| PHRASE DIFFICULTY | LEARNER'S GRADE | SEVENTH GRADE | EIGHTH GRADE | NINTH GRADE | TENTH GRADE | ELEVENTH GRADE | TWELFTH GRADE | UNIVERSITY |
|---|---|---|---|---|---|---|---|---|
| | LENGTH OF CHARACTERS | 1~3 | 4~6 | 7 | 8 | 9 | 10 | 11~ |
| PHRASE DIFFICULTY LEVEL | | 1 | 2 | 3 | 4 | 5 | 6 | 7 |
| COEFFICIENT 1 | | 1 | 0.95 | 0.9 | 0.85 | 0.8 | 0.75 | 0.7 |

FIG. 10

| LEARNER'S GRADE | SEVENTH GRADE | EIGHTH GRADE | NINTH GRADE | TENTH GRADE | ELEVENTH GRADE | TWELFTH GRADE | UNIVERSITY |
|---|---|---|---|---|---|---|---|
| LEARNER LEVEL | 1 | 2 | 3 | 4 | 5 | 6 | 7 |
| COEFFICIENT 1 | 1 | 0.95 | 0.9 | 0.85 | 0.8 | 0.75 | 0.7 |

FIG. 11

| DIFFICULTY LEVEL | 0 | 1 | 2 | 3 | 4 | 5 | 6 |
|---|---|---|---|---|---|---|---|
| COEFFICIENT | 1 | 0.95 | 0.9 | 0.85 | 0.8 | 0.75 | 0.7 |

* DIFFICULTY LEVEL = PHRASE DIFFICULTY LEVEL - LEARNER LEVEL. NEGATIVE VALUE IS REGARDED AS 0.

FIG. 12

```
              ╭─────────────────────────────────────────────╮
              │   START COEFFICIENT 1 CALCULATION PROCESS    │
              ╰─────────────────────────────────────────────╯
                                    │
                                    ▼                              S51
    ┌─────────────────────────────────────────────────────────────┐
    │  DIFFICULTY LEVEL = PHRASE DIFFICULTY LEVEL - LEARNER LEVEL   │
    └─────────────────────────────────────────────────────────────┘
                                    │
                                    ▼                   S52
              ┌──────────────────────────────────────┐
              │     COEFFICIENT 1 = F (DIFFICULTY)    │
              └──────────────────────────────────────┘
                                    │
                                    ▼
              ╭─────────────────────────────────────────────╮
              │   FINISH COEFFICIENT 1 CALCULATION PROCESS   │
              ╰─────────────────────────────────────────────╯
```

FIG. 13

```
       ( START COEFFICIENT 2 CALCULATION PROCESS )
                          |
                          v
              <  IS LOANWORD?  >────────── S61
                  |              |
                  | Y            | N ──── S63
                  v              v
            ┌──────────┐   ┌──────────┐
            │ LEVEL 1 = 1 │   │ LEVEL 1 = 0 │  S62
            └──────────┘   └──────────┘
                  |              |
                  v<─────────────┘
         <  IS TYPE OF CHARACTER SIMILAR?  >──── S64
                  |                    |
           SIMILAR |          NOT SIMILAR |
                  v                    v
            ┌──────────┐        ┌──────────┐
            │ LEVEL 2 = 1 │  S65   │ LEVEL 2 = 0 │  S66
            └──────────┘        └──────────┘
                  |                    |
                  v<───────────────────┘
              <  IS SPELLING SIMILAR?  >──── S67
           |            |                |
  PREDICTABLE      SIMILAR          NOT SIMILAR
           v            v                v
   ┌──────────┐  ┌──────────┐    ┌──────────┐
   │ LEVEL 3 = 1 │  │ LEVEL 3 = 2 │    │ LEVEL 3 = 0 │
   └──────────┘  └──────────┘    └──────────┘
    S68            S69              S70
           |            |                |
           └───────────>v<───────────────┘
            <  IS PRONUNCIATION SIMILAR?  >──── S71
                  |                    |
           SIMILAR |          NOT SIMILAR |
                  v                    v
            ┌──────────┐        ┌──────────┐
            │ LEVEL 4 = 2 │  S72   │ LEVEL 4 = 0 │  S73
            └──────────┘        └──────────┘
                  |                    |
                  v<───────────────────┘
   ┌───────────────────────────────────────────────┐
   │ SIMILARITY SUM = 1 + LEVEL 1 + LEVEL 2 + LEVEL 3 + LEVEL 4 │  S74
   └───────────────────────────────────────────────┘
                          |
                          v
        ┌──────────────────────────────┐
        │ COEFFICIENT 2 = F (SIMILARITY SUM) │  S75
        └──────────────────────────────┘
                          |
                          v
       ( FINISH COEFFICIENT 2 CALCULATION PROCESS )
```

FIG. 14

| SIMILARITY SUM | 1 | 2 | 3 | 4 | 5 | 6 | 7 |
|---|---|---|---|---|---|---|---|
| COEFFICIENT 2 | 0.7 | 0.75 | 0.8 | 0.85 | 0.9 | 0.95 | 1 |

# FIG. 15

| NATIVE LANGUAGE | | CHARACTER | PRONUNCIATION | PHRASE TO BE LEARNED internet | | | | |
| | | | | internet | | | | |
| | | | | LOANWORD | TYPE OF CHARACTER | SPELLING | PRONUNCIATION | SIMILARITY SUM |
| | ENGLISH | internet | internet | 1 | 1 | 2 | 2 | 7 |
| | FRENCH | internet | internet | 1 | 1 | 2 | 2 | 7 |
| | JAPANESE | インターネット | inta-netto | 1 | 0 | 1 | 2 | 5 |
| | CHINESE | 互联网 | hulianwang | 0 | 0 | 0 | 0 | 1 |

# FIG. 16

|  | PHRASE TO BE LEARNED インターネット inta-netto | | | | | | |
|---|---|---|---|---|---|---|---|
| NATIVE LANGUAGE | CHARACTER | PRONUNCIATION | LOANWORD | TYPE OF CHARACTER | SPELLING | PRONUNCIATION | SIMILARITY SUM |
| ENGLISH | internet | internet | 1 | 0 | 0 | 2 | 4 |
| FRENCH | internet | internet | 1 | 0 | 0 | 2 | 4 |
| JAPANESE | インターネット | inta-netto | 1 | 1 | 2 | 2 | 7 |
| CHINESE | 互联网 | hulianwang | 0 | 0 | 0 | 0 | 1 |

FIG. 17

SERVER 2

20 MAIN CONTROL UNIT (CPU)
201 PHRASE EXTRACTION MEANS
202 PHRASE MATCHING MEANS
203 PREDETERMINED PERIOD OF TIME CALCULATION MEANS
204 STORAGE CONTROL MEANS

21 STORAGE UNIT
211 USER SETTING STORAGE UNIT
212 LEARNING PHRASE STORAGE UNIT
213 PHRASE-RELATED INFORMATION STORAGE UNIT
214 LEARNING FILE STORAGE UNIT
215 CORRESPONDENCE TABLE STORAGE UNIT

22 COMMUNICATION UNIT
221 NATIVE LANGUAGE ETC. SETTING MEANS
222 PHRASE INFORMATION INPUT MEANS
223 LEARNING STAGE INPUT MEANS
224 OUTPUT MEANS

4

USER TERMINAL 3
31 INPUT UNIT
32 DISPLAY UNIT
33 COMMUNICATION UNIT

3
3

1

FIG. 18

EP 3 457 386 A1

211

**USER SETTING STORAGE UNIT**

USER IDENTIFICATION DATA

NATIVE LANGUAGE DATA

LERNER LEVEL DATA

213

**PHRASE-RELATED INFORMATION STORAGE UNIT**

REGISTRATION ORDER DATA

TYPE-OF-LANGUAGE DATA

PHRASE/INFLECTION DATA

PART-OF-SPEECH DATA

LEARNING LEVEL DATA

LINGUISTIC SIMILARITY DATA OF PHRASE RELATIVE TO NATIVE LANGUAGE

PHRASE DIFFICULTY DATA

LAST LEARNING TIME DATA

214

**LEARNING FILE STORAGE UNIT**

ENGLISH FILE DATA

FRENCH FILE DATA

CHINESE FILE DATA

JAPANESE FILE DATA

⋮

212

**LEARNING PHRASE STORAGE UNIT**

APPEARANCE ORDER DATA

EXTRACTED PHRASE DATA

REGISTRATION ORDER DATA (REFERENCE)

MEMORY STATE DATA

215

**CORRESPONDENCE TABLE STORAGE UNIT**

PREDETERMINED PERIOD OF TIME CORRESPONDENCE TABLE

PHRASE DIFFICULTY LEVEL CORRESPONDENCE TABLE

LERNER LEVEL CORRESPONDENCE TABLE

DIFFICULTY LEVEL CORRESPONDENCE TABLE

SIMILARITY SUM CORRESPONDENCE TABLE

## INTERNATIONAL SEARCH REPORT

| | International application No. |
|---|---|
| | PCT/JP2017/041334 |

**A. CLASSIFICATION OF SUBJECT MATTER**
Int. Cl. G09B5/02(2006.01)i, G06Q50/20(2012.01)i, G09B 19/06(2006.01)i

According to International Patent Classification (IPC) or to both national classification and IPC

**B. FIELDS SEARCHED**

Minimum documentation searched (classification system followed by classification symbols)
Int. Cl. G09B1/00-9/56, G09B17/00-19/26, G06Q50/20

Documentation searched other than minimum documentation to the extent that such documents are included in the fields searched
Published examined utility model applications of Japan     1922-1996
Published unexamined utility model applications of Japan   1971-2017
Registered utility model specifications of Japan           1996-2017
Published registered utility model applications of Japan   1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2016-194683 A (FUJITSU LTD.) 17 November 2016, entire text, all drawings & US 2016/0293045 A1, whole document | 1-8 |
| A | JP 2012-220988 A (PANASONIC CORP.) 12 November 2012, entire text, all drawings (Family: none) | 1-8 |
| A | JP 2014-516170 A (COOORI EHF) 07 July 2014, entire text, all drawings & US 2014/0170613 A1, whole document & WO 2012/153354 A1 | 1-8 |

☒  Further documents are listed in the continuation of Box C.          ☐  See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| | |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2017/041334 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2015-69160 A (DAINIPPON PRINTING CO., LTD.) 13 April 2015, entire text, all drawings (Family: none) | 1-8 |
| A | US 2006/0228691 A1 (CHEN, Yao-Ting) 12 October 2006, whole document & CN 1696992 A | 1-8 |

Form PCT/ISA/210 (continuation of second sheet) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H61994289766 A

- JP 2016234721 A